# EUROPÄISCHE PATENTANMELDUNG

(11) **EP 4 793 455 A1**
(43) Veröffentlichungstag der Anmeldung: **19.08.2026**
(21) Anmeldenummer: 25157787.0
(22) Anmeldetag: 13.02.2025
(51) Int. Cl.: E21B 3/02, B60L 50/53, E21B 7/02

(54) **ELEKTRISCHE HORIZONTALBOHRANLAGE**

(71) Anmelder: Max Streicher GmbH & Co. KG aA, 94469 Deggendorf (DE)
(72) Erfinder: Feldmeier, Christoph, 94227 Lindberg (DE); Glashauser, Alexander, 84163 Marklkofen/Poxau (DE); Heckendorf, Markus, 94469 Deggendorf, Fischerdorf (DE)
(74) Vertreter: Eisenführ Speiser

(57) **Zusammenfassung**

Die Erfindung betrifft elektrische Horizontalbohranlage (1) zum grabenlosen Verlegen von Leitungen, die aufweist: ein Fahrwerk (5) mit einem Fahrantrieb (50), einen Bohrmast (13), der einen Vorschubschlitten (19) umfasst, der zur Führung eines Bohrgestänges (21) vorgesehen ist, zumindest einen Bohrantrieb (25), wobei der Bohrantrieb (25) einen Vorschubantrieb (27) zum axialen Verschieben des Vorschubschlittens (19) und einen Rotationsantrieb (29) zum Rotieren des Bohrgestänges (21) umfasst; und eine Leistungselektronik (49), wobei der Bohrantrieb (25) und der Fahrantrieb (50) elektrische Antriebe sind, die über die Leistungselektronik (49) versorgt werden können, wobei die Leistungselektronik (49) eine Einspeisung (51) zum externen Zuführen elektrischer Energie, eine Speichereinheit (73), und einen Zwischenkreis (69) aufweist, wobei der Fahrantrieb (50), der Bohrantrieb (25) und die Speichereinheit (73) über den Zwischenkreis (69) mit der Einspeisung (51) verbunden sind, und wobei die Leistungselektronik (49) dazu ausgebildet ist, elektrische Energie zu rekuperieren. Ferner betrifft die Erfindung ein System umfassend eine elektrische Horizontalbohranlage.

## Beschreibung

Die Erfindung betrifft eine elektrische Horizontalbohranlage zum Einsatz beim grabenlosen Verlegen von Leitungen, wobei die Bohranlage ein Fahrwerk mit einem Fahrantrieb, einen Bohrmast, der einen Vorschubschlitten umfasst, der zur Führung eines Bohrgestänges vorgesehen ist, und zumindest einen Bohrantrieb aufweist, wobei der Bohrantrieb einen Vorschubantrieb zum axialen Verschieben des Vorschubschlittens und einen Rotationsantrieb zum Rotieren des Bohrgestänges umfasst.

Horizontalbohranlagen sind Anordnungen zum Erzeugen oder Aufweiten einer Bohrung im Boden. In der Regel werden Horizontalbohranlagen zum Erzeugen von Erdbohrungen im Erdreich eingesetzt. Ein Bohrgestänge und ein gegebenenfalls an einem Arbeitsende des Bohrgestänges angeordnetes Bohrwerkzeug der Horizontalbohranlage werden durch den Bohrantrieb der Horizontalbohranlage rotatorisch und/oder translatorisch bewegt, um die Erdbohrung zu erzeugen. Insbesondere können Erdbohrungen durch die kombinierte Wirkung eines Bohrkopfes und einer durch das Bohrgestänge geleiteten Bohrspülung erzeugt werden (Spülbohren). Beispielsweise kann durch eine Bentonit-Bohrspülung durch das Bohrgestänge, das auch den Bohrkopf führt, gepumpt werden, um Material ab- und auszutragen. Das unter Verwendung von Horizontalbohranlagen durchgeführte Bohrverfahren wird auch als steuerbares Horizontalbohrverfahren (Horizontal Directional Drilling - kurz: HDD) bezeichnet. Bekannte Horizontalbohrvorrichtungen zum Erzeugen von Erdbohrungen haben hydraulische Antriebe. Die Hydraulikaggregate dieser hydraulischen Antriebe werden bei bekannten Vorrichtungen über Verbrennungskraftmaschinen, wie dieselbetriebene oder benzinbetriebene Verbrennungsmotoren, angetrieben. Im Betrieb stoßen die Verbrennungskraftmaschinen Schadstoffe aus, sodass konventionelle Horizontalbohranlagen nicht mehr überall eingesetzt werden können oder dürfen. Insbesondere in urbanen Gebieten müssen bereits heute teilweise strenge Abgasvorschriften eingehalten werden. Die von den Verbrennungskraftmaschinen konventioneller Horizontalbohranlagen verursachten Lärmemission können zudem einen Einsatz in bewohnten Gebieten vollständig unmöglich machen oder die Einsatzzeit kann auf bestimmte Uhrzeiten beschränkt sein.

Aus DE 10 2018 113 274 A1 ist eine Anordnung zum Erzeugen oder Aufweiten einer Erdbohrung im Erdreich bekannt, die eine Bohrvorrichtung mit mindestens einer hydraulischen Antriebseinheit und eine Hydraulikpumpe zum Fördern einer Hydraulikflüssigkeit zu der hydraulischen Antriebseinheit umfasst. Es ist ferner eine elektrische Antriebseinheit zum Antrieb der Hydraulikpumpe vorgesehen, wobei ein Akkupack die für die elektrische Antriebseinheit erforderliche elektrische Energie bereitstellt. Nachteilig an dieser Anordnung sind die beschränkte Einsatzzeit sowie die geringe Energieeffizienz.

Aufgabe der Erfindung ist es, eine Horizontalbohranlage anzugeben, die geringen Einsatzbeschränkungen unterliegt und/oder eine verbesserte Energieeffizienz aufweist.

In einem ersten Aspekt löst die Erfindung diese Aufgabe mit einer elektrischen Horizontalbohranlage mit den Merkmalen des Anspruchs 1. Insbesondere löst die Erfindung die Aufgabe mit einer elektrischen Horizontalbohranlage, insbesondere vollelektrische Horizontalbohranlage, zum Einsatz beim grabenlosen Verlegen von Leitungen, wobei die Bohranlage aufweist: ein Fahrwerk mit einem Fahrantrieb, einen Bohrmast, der einen Vorschubschlitten umfasst, der zur Führung eines Bohrgestänges vorgesehen ist, zumindest einen Bohrantrieb, wobei der Bohrantrieb einen Vorschubantrieb zum axialen Verschieben des Vorschubschlittens und einen Rotationsantrieb zum Rotieren des Bohrgestänges umfasst; und eine Leistungselektronik, wobei der Bohrantrieb und der Fahrantrieb elektrische Antriebe sind, die über die Leistungselektronik versorgt werden können, wobei die Leistungselektronik eine Einspeisung zum externen Zuführen elektrischer Energie, eine Speichereinheit, und einen Zwischenkreis aufweist, wobei der Fahrantrieb, der Bohrantrieb und die Speichereinheit über den Zwischenkreis mit der Einspeisung verbunden sind, und wobei die Leistungselektronik dazu ausgebildet ist, elektrische Energie zu rekuperieren.

In anderen Aspekten kann die Leistungselektronik auch ohne Rekuperationsfähigkeit ausgestaltet sein. Es soll verstanden werden, dass eine zum Rekuperieren elektrischer Energie ausgebildete Leistungselektronik nicht zwingend vorhanden sein muss. Insbesondere bevorzugt ist auch eine elektrische Horizontalbohranlage, insbesondere vollelektrische Horizontalbohranlage, zum Einsatz beim grabenlosen Verlegen von Leitungen, wobei die Bohranlage aufweist: ein Fahrwerk mit einem Fahrantrieb, einen Bohrmast, der einen Vorschubschlitten umfasst, der zur Führung eines Bohrgestänges vorgesehen ist, zumindest einen Bohrantrieb, wobei der Bohrantrieb einen Vorschubantrieb zum axialen Verschieben des Vorschubschlittens und einen Rotationsantrieb zum Rotieren des Bohrgestänges umfasst; und eine Leistungselektronik, wobei der Bohrantrieb und der Fahrantrieb elektrische Antriebe sind, die über die Leistungselektronik versorgt werden können, wobei die Leistungselektronik eine Einspeisung zum externen Zuführen elektrischer Energie und einen Zwischenkreis aufweist, wobei der Fahrantrieb und der Bohrantrieb über den Zwischenkreis mit der Einspeisung verbunden sind. Die Leistungselektronik einer solchen elektrischen Horizontalbohranlage kann optional eine Speichereinheit aufweisen, die über den Zwischenkreis mit der Einspeisung verbunden ist.

Im Folgenden wird die elektrische Horizontalbohranlage gemäß dem ersten Aspekt weiter erläutert. Es soll jedoch verstanden werden, dass die nachstehenden Erläuterungen auch für elektrische Horizontalbohranlagen mit Leistungselektronik gelten, die nicht zum Rekuperieren elektrischer Energie ausgebildet sind.

Eine elektrische Horizontalbohranlage ist eine Horizontalbohranlage, bei der zumindest eine Hauptfunktion elektrisch angetrieben wird. Die Hauptfunktionen einer Horizontalbohranlage umfassen insbesondere ein Bohren mittels Bohrantrieb und/oder ein Verfahren der Horizontalbohranlage mittels des Fahrantriebs. Das Bohren mittels Bohrantrieb kann umfassen, dass die Horizontalbohranlage ein Bohrgestänge zumindest mittelbar unter Verwendung eines Rotationsantriebs rotatorisch antreibt und/oder zumindest mittelbar unter Verwendung eines Vorschubantriebs in einer Vorschubrichtung antreibt. Der Fahrantrieb ist zum Bewegen der Horizontalbohranlage vorgesehen und treibt das Fahrwerk der Horizontalbohranlage, das vorzugsweise ein Raupenfahrwerk ist, an. Der Bohrantrieb einer elektrischen Horizontalbohranlage kann ein Hydraulikaggregat umfassen, das von einem Elektromotor angetrieben wird. Vorzugsweise ist der Bohrantrieb aber ein rein elektrischer bzw. vollelektrischer Bohrantrieb. Der Fahrantrieb ist vorzugsweise ein vollelektrischer Fahrantrieb. Ein Aktuator eines vollelektrischen Fahrantriebs ist vorzugsweise unmittelbar oder mittelbar über einen Elektromotor angetrieben. Bei einem mittelbaren Antrieb kann zwischen Elektromotor und Aktuator ein Getriebe vorgesehen sein. Bei einer vollelektrischen Horizontalbohranlage sind sämtliche Hauptfunktionen, insbesondere eine Bohrfunktion, ein Verfahren der Horizontalbohranlage und eine Spülpumpe, rein elektrisch angetrieben. Bevorzugt sind also ein Rotationsantrieb, ein Vorschubantrieb, ein Fahrantrieb und ein Antrieb einer Spülpumpe vollelektrische Antriebe. Vorzugsweise können auch Nebenantriebe, wie vorzugsweise einer oder mehrere Mastantriebe zum Errichten des Bohrmasts, einer oder mehrere Ankerantriebe zum Bewegen eines Halteankers und/oder einer oder mehrere Kabinenantriebe zum Bewegen einer Bedienkabine elektrische Antriebe sein. Vollelektrische Antriebe und vollelektrische Funktionen im Sinne der vorliegenden Offenbarung nutzen keine fluidtechnischen Leistungsübertragungen. Insbesondere umfassen vollelektrische Funktionen keine hydraulischen Antriebe. Es soll jedoch verstanden werden, dass fluidtechnische (Hilfs-)Funktionen vorhanden sein können. Beispielsweise kann eine Ölschmierung und/oder eine Wasserkühlung auch bei vollelektrischen Antrieben vorgesehen sein. Vorzugsweise kann die elektrische Horizontalbohranlage auch ein elektrisch angetriebenes Hydraulikaggregat umfassen. Dies kann insbesondere ein Hydraulikaggregat für Nebenfunktionen sein, das eine Leistung von 50 kW oder weniger, insbesondere 30 kW oder weniger, aufweist. Ein Hydraulikaggregat kann beispielsweise dazu ausgebildet sein, eine oder mehrere Funktionen, insbesondere Nebenfunktionen, der Horizontalbohranlage hydraulisch anzutreiben. Beispielsweise kann ein Hydraulikaggregat elektromotorisch angetrieben und dazu vorgesehen sein, einen oder mehrere Hydraulikzylinder zum Errichten des Bohrmasts hydraulisch anzutreiben.

Beim HDD-Verfahren wird zum Erzeugen eines Bohrlochs bzw. eines Bohrkanals zum Verlegen von Leitungen ein Bohrgestänge durch den Untergrund getrieben. An dem Bohrgestänge kann ein Bohrwerkzeug geführt sein. Aufgrund des Bohrfortschritts muss das Bohrgestänge in der Regel schrittweise verlängert werden, da sich das Bohrgestänge mit zunehmendem Fortschritt des Bohrprozesses entlang des geplanten Pfads vorarbeitet. Das Bohrgestänge ist auf einen Vorschubschlitten geführt, der wiederrum verschiebbar an dem Bohrmast angeordnet ist. Die Neigung des Bohrmasts kann vorzugsweise einstellbar sein. Hierfür kann die Horizontalbohranlage einen Mastantrieb umfassen, der vorzugsweise ein elektrischer Mastantrieb ist.

Der Bohrantrieb ist zum Bereitstellen der Bohrfunktion vorgesehen. Es soll verstanden werden, dass der Bohrantrieb kein einzelner Antrieb sein muss, sondern auch eine Anordnung aus mehreren Antrieben sein kann, die zum Bereitstellen der Bohrfunktion vorgesehen ist. Vorzugsweise treibt der Bohrantrieb das Bohrgestänge an. Dieses Antreiben des Bohrgestänges erfolgt vorzugsweise mittelbar. Der Bohrantrieb umfasst einen Vorschubantrieb und einen Rotationsantrieb. Der Vorschubantrieb ist zum axialen bzw. translatorischen Verschieben des Vorschubschlittens vorgesehen. Durch das axiale Verschieben des Vorschubschlittens wird auch das darauf geführte Bohrgestänge bewegt und so angetrieben. Der Rotationsantrieb ist zum Rotieren des Bohrgestänges vorgesehen. Der Rotationsantrieb bringt also mittelbar oder unmittelbar eine Drehbewegung auf das Bohrgestänge auf. Hierfür greift der Rotationsantrieb vorzugsweise an einem dem Bohrwerkzeug gegenüberliegenden zweiten Ende des Bohrgestänges an. Ein mittelbarer Rotationsantrieb ist bevorzugt über ein Bohrgetriebe mit dem Bohrgestänge verbunden. Das Bohrgetriebe kann eine Übersetzung oder Untersetzung bereitstellen, kann aber auch nur zum Bereitstellen eines Achsversatzes zwischen einer Bohrgestängelängsachse des Bohrgestänges und einer Antriebswelle des Rotationsantriebs vorgesehen sein. Vorzugsweise ist der Rotationsantrieb auf dem Vorschubschlitten angeordnet und zusammen mit dem Vorschubschlitten bewegbar. Es kann aber beispielsweise auch vorgesehene sein, dass der Rotationsantrieb auf einem eigenen Schlitten angeordnet oder stationär ist.

Die Leistungselektronik ist zum Versorgen elektrischer Antriebe vorgesehen. Vorzugsweise versorgt die Leistungselektronik den elektrischen Bohrantrieb und/oder den elektrischen Fahrantrieb mit elektrischer Energie. Das Versorgen mit elektrischer Energie umfasst insbesondere das Bereitstellen elektrischer Energie mit für die Antriebe geeigneten Spannungs-, Strom- und Leistungsniveaus. Die elektrische Energie zum Versorgen des Fahrantriebs und/oder des Bohrantriebs über Leistungselektronik wird vorzugsweise zumindest teilweise extern zugeführt. Hierfür umfasst die Leistungselektronik eine Einspeisung. Die Einspeisung kann einen Eingangsanschluss zum Verbinden mit einer externen Stromquelle umfassen. Beispielsweise kann der Eingangsanschluss als Starkstromstecker ausgebildet sein. Ferner kann die Einspeisung einen oder mehrere Schalter aufweisen, die vorzugsweise zum Freigeben und/oder Unterbrechen der externen Stromversorgung ausgebildet sind. Die Einspeisung ist mit dem Zwischenkreis verbunden, sodass an der Einspeisung zugeführte elektrische Energie auf den Zwischenkreis übertragbar ist. Die Einspeisung und der Zwischenkreis können unmittelbar und/oder mittelbar verbunden sein. Bei einer mittelbaren Verbindung kann vorzugsweise zumindest ein Wandler und/oder Stromrichter vorgesehen sein, wobei dieser Wandler und/oder Stromrichter der Einspeisung zugeordnet ist. Beispielsweise kann ein Stromrichter vorgesehen sein, der extern zugeführte Wechselspannung in Gleichspannung gleichrichtet. Vorzugsweise ist ein Stromrichter, der zur aktiven Gleichrichtung ausgebildet ist, vorgesehen. Ein solcher Stromrichter kann auch kurz als aktive Gleichrichtung bezeichnet werden. Eine aktive Gleichrichtung wandelt extern zugeführte Wechselspannung in Gleichspannung und erlaubt das Rückspeisen elektrischer Leistung aus dem System an eine externe Quelle (ein externes Stromnetz).

Der Fahrantrieb und der Bohrantrieb sind vorzugsweise mit dem Zwischenkreis verbunden und werden über den Zwischenkreis mit elektrischer Energie versorgt. Bevorzugt sind der Fahrantrieb und der Bohrantrieb über den Zwischenkreis mit der Einspeisung verbunden. Die Leistungselektronik umfasst vorzugsweise ferner eine Speichereinheit. Die Speichereinheit ist über den Zwischenkreis mit der Einspeisung verbunden. Vorzugsweise kann der Speichereinheit über den Zwischenkreis externe elektrische Energie zugeführt werden, die dann in der Speichereinheit gespeichert werden kann. Die Speichereinheit umfasst beispielsweise einen Akku, insbesondere Lithium-Ionen-Akku. Die Speichereinheit kann dazu vorgesehen sein, elektrische Energie zu speichern und zum Ausgleichen von Schwankungen der externen Energieversorgung bereitzustellen.

Gemäß dem ersten Aspekt der Erfindung ist die Leistungselektronik dazu ausgebildet, elektrische Energie zu rekuperieren. Rekuperieren bzw. Rekuperation bezeichnet im Rahmen der vorliegenden Offenbarung die Rückgewinnung von elektrischer Energie aus anderen Energieformen, insbesondere kinetischer Energie und/oder potentieller Energie. Durch das Rekuperieren kann die Energieeffizienz der elektrischen Horizontalbohranlage gesteigert werden, da Energie, die bei konventionellen Horizontalbohranlagen verloren geht, rückgewonnen und erneut genutzt werden kann. Der Anteil der nicht genutzten Energie kann so reduziert werden, wodurch der Wirkungsgrad der Anlage bzw. deren Effizienz steigt. Dies ermöglicht die Schonung wertvoller Ressourcen und reduziert zugleich die Betriebskosten.

Im Betrieb muss zumindest das eingesetzte Bohrgestänge regelmäßig beschleunigt und/oder gebremst werden. Auch der Vorschubschlitten muss im Betrieb beschleunigt und/oder gebremst werden. So ist der Rotationsantrieb in bevorzugten Varianten auf dem Vorschubschlitten angeordnet und mit dem Bohrgestänge gekoppelt. Die Einheit aus Rotationsantrieb, Vorschubschlitten und Bohrgestänge wird dann beispielsweise im Betrieb über den Vorschubschlitten beschleunigt bzw. angetrieben, um das Bohrgestänge voranzutreiben. Zum Einsetzen einer weiteren Bohrstange des Bohrgestänges wird das Bohrgestänge zunächst vom Rotationsantrieb abgekoppelt und der Vorschubschlitten mitsamt Rotationsantrieb entgegen der Vorschubrichtung zurückgefahren. Zum Bremsen des Vorschubschlittens und/oder des Bohrgestänges muss dem Vorschubschlitten bzw. dem Bohrgestänge Energie entzogen werden. Hierfür können das Bohrgestänge und/oder der Vorschubschlitten (ggf. inkl. Rotationsantrieb) in der Regel aktiv gebremst werden. Hierbei wird dem Vorschubschlitten und/oder dem Bohrgestänge aktiv (kinetische) Energie entzogen. Erfindungsgemäß kann insbesondere diese Energie rekuperiert und zumindest teilweise in das System der Horizontalbohranlage zurückgeführt werden. Anders als in herkömmlichen Systemen muss die Energie also nicht (vollständig) dissipiert werden. Die rekuperierte Energie kann beispielsweise von Verbrauchern der elektrischen Horizontalbohranlage genutzt werden. Es kann aber zusätzlich auch eine Dissipationsvorrichtung zum Dissipieren elektrischer Energie und/oder eine Reibbremse vorgesehen sein. Beispielsweise kann die Leitungselektronik einen Bremswiderstand aufweisen, der elektrische Energie in Wärmeenergie umsetzt bzw. dissipiert. Es soll jedoch verstanden werden, dass die Erfindung nicht auf die Rekuperation der kinetischen Energie des bewegten Vorschubschlittens beschränkt ist.

Vorzugsweise ist die Leistungselektronik dazu ausgebildet, rekuperierte elektrische Energie in ein externes System zurück zu speisen. Besonders bevorzugt ist die Einspeisung eine bidirektionale Einspeisung. Eine bidirektionale Einspeisung ist zum bidirektionalen Leiten von elektrischer Energie ausgebildet, ist also zum Zuführen von elektrischer Energie in das System der Horizontalbohranlage als auch zum Abführen von elektrischer Energie aus dem System der Horizontalbohranlage in ein externes System ausgebildet. Vorzugsweise ist die Horizontalbohranlage dazu ausgebildet, rekuperierte elektrische Energie über die Einspeisung in ein externes System zurück zu speisen. Beispielsweise kann rekuperierte elektrische Energie über die Einspeisung in ein an die Einspeisung angeschlossenes öffentliches Stromnetz eingespeist werden. Zum Rückspeisen elektrischer Energie kann aber auch eine Rückspeisung vorgesehen sein, die gesondert zur Einspeisung ausgebildet ist.

Gemäß einer ersten bevorzugten Ausführungsform der Erfindung ist die Leistungselektronik dazu ausgebildet, rekuperierte elektrische Energie in der Speichereinheit zwischen zu speichern. Rekuperierte elektrische Energie kann so im System der Horizontalbohranlage verbleiben und zu einem späteren Zeitpunkt erneut genutzt werden. Das Speichern rekuperierter elektrischer Energie kann dazu beitragen, die Betriebskosten der Horizontalbohranlage zu senken. So sind die Kosten, welche für den Bezug elektrischer Energie anfallen, in der Regel deutlich höher als die Vergütung, die von einem Netzbetreiber oder Energieversorger für das Rückspeisen elektrischer Energie bezahlt wird. Beispielsweise kann der für eine Kilowattstunde Strom zu zahlende Preis die Vergütung je eingespeister Kilowattstunde Strom um ein Vielfaches übersteigen. Durch das Zwischenspeichern elektrischer Energie kann die extern bezogene Energiemenge reduziert werden, wodurch auch die Betriebskosten der Horizontalbohranlage sinken.

Vorzugsweise sind alle elektrischen Antriebe und/oder alle elektrischen Direktantriebe über den Zwischenkreis mit der Einspeisung verbunden. Besonders bevorzugt sind alle elektrischen Direktantriebe, zumindest ein Bremswiderstand und die Speichereinheit über den Zwischenkreis mit der Einspeisung verbunden. Vorzugsweise umfasst das System einen Bremswiderstand für die gesamte Leistungselektronik. Es können aber in Varianten auch mehrere Bremswiderstände vorgesehen sein, beispielsweise je ein Bremswiderstand für den Rotationsantrieb und den Vorschubantrieb.

In einer bevorzugten Weiterbildung ist die Leistungselektronik dazu ausgebildet, den Fahrantrieb zum Bewegen der elektrischen Horizontalbohranlage allein durch die Speichereinheit mit elektrischer Energie zu versorgen, sodass die Bohranlage ohne externe Energieversorgung verfahrbar ist. Alternativ oder ergänzend kann die Leistungselektronik dazu ausgebildet sein, einen Mastantrieb des Bohrmastes allein durch die Speichereinheit mit elektrischer Energie zu versorgen, sodass der Bohrmast ohne externe Energieversorgung zwischen einer Transportstellung und einer errichteten Betriebsstellung bewegbar ist. Alternativ oder ergänzend zu einer der vorstehenden Varianten kann die Leistungselektronik dazu ausgebildet sein, unter Verwendung der Speichereinheit ausreichend elektrische Energie bereitzustellen, den Vorschubantrieb und/oder den Rotationsantrieb zumindest unter Teillast zu betreiben. Besonders bevorzugt ist die Leistungselektronik dazu ausgebildet den Fahrantrieb, den Mastantrieb, den Vorschubantrieb und/oder den Rotationsantrieb ohne externe Energieversorgung zumindest in Teillast zu betreiben. Durch das Betreiben des Fahrantriebs, des Mastantriebs, des Vorschubantriebs und/oder des Rotationsantriebs ohne externe Energieversorgung kann die elektrische Horizontalbohranlage zumindest teilweise energieautark betrieben werden.

Wenn die Leistungselektronik dazu ausgebildet ist, den Fahrantrieb allein durch die Speichereinheit mit elektrischer Energie zu versorgen, kann die Horizontalbohranlage ohne externe Energieversorgung an den vorgesehenen Einsatzort verfahren werden. Das Einrichten einer Baustelle und/oder das Umsetzen der Horizontalbohranlage auf einer Baustelle kann erheblich vereinfacht sein, insbesondere, wenn keine von Lastkraftwagen oder Fahrzeugkränen befahrbaren Wege vorhanden sind. Die Anlage kann so vorzugsweise die "letzten Meter" zum Einsatzort ohne externe Hilfsmittel zurücklegen. Besonders bevorzugt ist die Speichereinheit so ausgebildet, dass die Horizontalbohranlage (mit zu Beginn bis zur maximalen Kapazität gefüllter Speichereinheit) eine Mindeststrecke von 1 km zurücklegen kann und/oder dass der Fahrantrieb für einen Zeitraum von mindestens 30 min, vorzugsweise zumindest 45 min, besonders bevorzugt zumindest 60 min, bei Volllast betrieben werden kann. Die hierfür notwendige Speicherkapazität der Speichereinheit ergibt sich im Wesentlichen aus dem Gesamtgewicht der Anlage und dem Wirkungsgrad des Fahrantriebs.

Das Bewegen des Bohrmasts von der Transportstellung, in der sich der Bohrmast während des Verfahrens und/oder Transports der Horizontalbohranlage befindet, und der Betriebsstellung, wird auch als Errichten bezeichnet. Üblicherweise ist der Bohrmast in der Transportstellung im Wesentlichen parallel zum Untergrund orientiert. In der errichteten Stellung ist der Bohrmast gegenüber der Horizontalen bzw. dem Untergrund geneigt. Es soll verstanden werden, dass der Bohrmast in der Betriebsstellung, insbesondere Abhängig vom Anwendungsfall, auch verschiedene Neigungen haben kann, es also nicht eine feste Betriebsstellung geben muss. Das Errichten des Bohrmasts der Bohranlage unter Verwendung elektrischer Energie, die allein durch die Speichereinheit bereitgestellt wird, erleichtert das Einrichten der Baustelle. Beispielsweise kann die Einspeisung im errichteten Zustand leichter zugänglich sein. Ferner kann die Ausrichtung der Bohranlage leichter korrigiert werden.

Wenn die Leistungselektronik dazu ausgebildet den Vorschubantrieb und/oder den Rotationsantrieb zumindest unter Teillast zu betreiben, kann die Horizontalbohranlage eine Bohraufgabe zumindest teilweise unabhängig von einer externen Energieversorgung ausführen. Beispielsweise kann die Horizontalbohranlage auch bei einem Ausfall der externen Stromversorgung weiter betrieben werden.

Volllast bezeichnet jeweils die maximal abrufbare Leistung des jeweiligen Antriebs. In Teillast erbringt der Vorschubantrieb und/oder der Rotationsantrieb nicht die volle Leistung. Vorzugsweise ist die Leistungselektronik dazu ausgebildet, unter Verwendung der Speichereinheit ausreichend elektrische Energie bereitzustellen, um den Vorschubantrieb und/oder den Rotationsantrieb unter Volllast zu betreiben. Alternativ oder ergänzend kann die Leistungselektronik aber auch dazu ausgebildet sein, unter Verwendung der Speichereinheit ausreichend elektrische Energie bereitzustellen, um den Vorschubantrieb und/oder den Rotationsantrieb in einem Teillastbereich von bis zu 95% oder weniger, bevorzugt bis zu 80%, bevorzugt bis zu 60% der Volllast zu betreiben. Vorzugsweise kann die Leistungselektronik auch dazu ausgebildet sein, mittels der Speichereinheit ausreichend elektrische Energie bereitzustellen, um den Mastantrieb, den Fahrantrieb, den Rotationsantrieb und/oder den Vorschubantrieb zu Wartungszwecken zu verfahren. So kann beispielsweise der Bohrmast ohne externe Stromversorgung errichtet werden, um diesen zu Wartungszwecken zugänglich zu machen.

Um den Fahrantrieb, den Mastantrieb, den Vorschubantrieb und/oder den Rotationsantrieb allein mit elektrischer Energie zu versorgen, ist die Speichereinheit vorzugsweise entsprechend ausgebildet. Insbesondere ist eine Speicherkapazität der Speichereinheit so angepasst, dass der Betrieb zumindest eines der Antriebe bei entsprechenden Lasten für einen Mindestzeitraum durchgeführt werden kann. Ferner ist eine von der Speichereinheit bereitstellbare Stromstärke, Spannung und/oder elektrische Leistung entsprechend auf die Anforderung abgestimmt.

In einer bevorzugten Ausgestaltung ist die Einspeisung so ausgebildet, dass der elektrischen Horizontalbohranlage externe elektrische Energie sowohl mit Gleichspannung als auch mit Wechselspannung zugeführt werden kann. Hierdurch wird der Einsatzbereich der Horizontalbohranlage erweitert. Beispielsweise kann die Horizontalbohranlage dann über ein externes Wechselspannungsnetz oder über einen externen Akku, der Gleichspannung bereitstellt, mit elektrischer Energie versorgt werden. Vorzugsweise umfasst die Einspeisung einen Stromrichter, der zum Gleichrichten von Wechselspannung in Gleichspannung und/oder zum Wechselrichten von Gleichspannung in Wechselspannung ausgebildet ist. Vorzugsweise kann die Einspeisung einen ersten Einspeisepfad, welcher den Stromrichter umfasst, und einen zweiten Bypasspfad, der den Stromrichter umgeht, aufweisen. Der Stromrichter kann aber auch dazu ausgebildet sein, anliegende Wechsel- oder Gleichspannung unverändert durchzuleiten. Beispielsweise kann die Richtfunktion des Stromrichters zu- und abschaltbar sein. Ferner kann der Stromrichter alternativ oder ergänzend auch zum Umrichten der Frequenz und/oder Amplitude einer Wechselspannung ausgebildet sein.

Bevorzugt ist oder umfasst der Zwischenkreis einen Gleichspannungskreis, insbesondere Hochvoltgleichspannungskreis. Die Einspeisung umfasst vorzugsweise zumindest einen Anschluss, eine Filtereinheit; und einen Stromrichter. Der Stromrichter ist vorzugsweise ein Active-Front-End-Umrichter (AFE-Umrichter). Ein AFE-Umrichter, der auch als Frequenzumrichter mit geregeltem Netzgleichrichter bezeichnet wird, kann eine Rückspeisung elektrischer Energie in ein externes System (insbesondere Stromnetz) erleichtern oder ermöglichen, und/oder eine sinusförmige Stromaufnahme aus einem externen Stromnetz erleichtern. So kann ein AFE-Umrichter eine Reduzierung niederfrequenter Oberschwingungen erlauben. Die Filtereinheit ist vorzugsweise eine Filtereinheit zur Verbesserung der sogenannten Elektromagnetischen Verträglichkeit (EMV) und kann in solchen Ausgestaltungen auch als EMV-Filtereinheit bezeichnet werden. Eine EMV-Filtereinheit kann energiereiche Störspannungen aus einem externen Netz reduzieren oder unterdrücken. Die Filtereinheit ist oder umfasst vorzugsweise eine LCL-Filtereinheit. Der AFE-Umrichter kann zum Wechselrichten, zum Gleichrichten und/oder zum Umrichten ausgebildet sein.

In einer bevorzugten Weiterbildung umfasst die Horizontalbohranlage, insbesondere die Leistungselektronik der Horizontalbohranlage, einen Bypass zur unmittelbaren Verbindung eines Anschlusses der Einspeisung mit dem Gleichspannungskreis. Der Bypass kann beispielsweise dann genutzt werden, wenn eine externe Quelle zum Bereitstellen von elektrischer Energie mit Gleichspannung vorhanden ist.

Gemäß einer bevorzugten Ausgestaltung umfasst die elektrische Horizontalbohranlage ein flüssigkeitsbasiertes Thermomanagementsystem zum Temperieren zumindest einer Teilkomponente der Leistungselektronik, des Bohrantriebs, des Fahrantriebs und/oder einer Bedienkabine der Horizontalbohranlage. Unter Temperieren wird vorliegend eine Temperaturbeeinflussung der Leistungselektronik, des Bohrantriebs, des Fahrantriebs, einer Bedienkabine und/oder einer anderen Teilkomponente oder Baugruppe der Horizontalbohranlage verstanden. Das Temperieren ist insbesondere ein Kühlen oder Wärmen bzw. Heizen der Teilkomponente. Beispielsweise kann das Thermomanagementsystem zum Kühlen der Leistungselektronik im Betrieb und/oder zum Vorwärmen der Leistungselektronik vor der Inbetriebnahme vorgesehen sein. Ein flüssigkeitsbasiertes Thermomanagementsystem verwendet ein flüssiges Medium zum Temperieren der jeweiligen Komponenten. Beispielsweise kann zum Kühlen der Leistungselektronik oder einer Teilkomponente der Leistungselektronik gekühltes Wasser, das mit Zusatzstoffen versetzt sein kann, durch Kühlkanäle an und/oder in der Leistungselektronik geleitet werden.

Vorzugsweise umfasst das Thermomanagementsystem einen ersten Thermomanagementkreislauf zum Temperieren der Filtereinheit oder zumindest einer Teilkomponente der Filtereinheit. Ein Thermomanagementkreislauf ist ein geschlossener Kreislauf für das Kühlmittel. Wenn der Thermomanagementkreislauf zum Kühlen vorgesehen ist, kann dieser auch als Kühlkreislauf bezeichnet werden. Wenn der Thermomanagementkreislauf zum Heizen einer Komponente eingesetzt wird, kann dieser auch als Heizkreislauf bezeichnet werden. Durch das Vorsehen eines Thermomanagementkreislaufs für die Filtereinheit kann deren Temperatur besonders genau gesteuert werden, wodurch die Effizienz, Lebensdauer oder Filterfunktion der Filtereinheit verbessert sein kann.

In einer bevorzugten Weiterbildung umfasst das Thermomanagementsystem ferner einen zweiten Thermomanagementkreislauf zum Temperieren der Speichereinheit. Der zweite Thermomanagementkreislauf ist vorzugsweise zum Kühlen und/oder zum Heizen der Speichereinheit ausgebildet. Durch ein Heizen der Speichereinheit kann die Leistungsfähigkeit der Speichereinheit bei niedrigen Umgebungstemperaturen verbessert werden. Durch Kühlen kann die Leistungsfähigkeit bei intensivem Betrieb und/oder bei hohen Umgebungstemperaturen gesichert und Schäden können verhindert werden. Durch das Vorsehen getrennter Thermomanagementkreisläufe für die Filtereinheit und die Speichereinheit können diese besonders individuell temperiert und so im optimalen Temperaturbereich betrieben werden, sodass die Effizienz dieser Komponenten gesteigert sein kann. Vorzugsweise kann das Thermomanagementsystem auch einen oder mehrere weitere Thermomanagementkreisläufe, insbesondere zum Klimatisieren einer Bedienkabine, zum Temperieren eines oder mehrere Antriebe und/oder zum Temperieren eines Hydraulikaggregats aufweisen.

In einer bevorzugten Ausführungsform ist die Leistungselektronik dazu ausgebildet, zumindest einem Antrieb unter Verwendung der Speichereinheit eine elektrische Leistung bereitzustellen, die größer ist als eine externe Versorgungsleistung einer mit der Einspeisung verbundenen externen Energieversorgung. Bevorzugt ist die Leistungselektronik dazu ausgebildet dem Vorschubantrieb und/oder dem Rotationsantrieb eine elektrische Leistung bereitzustellen, die größer ist als eine externe Versorgungsleistung. So kann der Antrieb auch dann mit hoher Leistung betrieben werden, wenn die von einer externen Quelle bereitgestellte Versorgungsleistung limitiert ist. Die Leistungselektronik ist vorzugsweise dazu ausgebildet, dem zumindest einen Antrieb sowohl über eine externe Quelle als auch über die Speichereinheit mit elektrischer Energie zu versorgen. Beispielsweise kann so am Rotationsantrieb kurzzeitig eine hohe elektrische Leistung bereitgestellt werden, die von der externen Energieversorgung allein nicht bereitstellbar wäre. Die Einsatzbereitschaft und/oder Leistung der Horizontalbohranlage kann gegebenenfalls erhöht werden. Beispielsweise kann ein Bohrloch auch dann weiter vorangetrieben werden, wenn die reguläre externe Netzleistung die hierfür benötigte Leistung nicht bereitstellen kann.

Bevorzugt weist die Horizontalbohranlage ferner eine Leistungsregeleinheit auf, die dazu ausgebildet ist, eine Leistungsaufnahme eines Antriebs zu begrenzen, falls ein Gesamtleistungsbedarf der Horizontalbohranlage größer ist als eine an der Einspeisung bereitgestellte Versorgungsleistung, und/oder mittels der Speichereinheit eine Pufferleistung bereitzustellen, falls ein Gesamtleistungsbedarf der Horizontalbohranlage größer ist als eine an der Einspeisung bereitgestellte Versorgungsleistung. Die Leistungsregeleinheit kann zum Ausgleichen von Lastspitzen dienen. Wenn ein Gesamtleistungsbedarf der Horizontalbohranlage größer ist als ein von einer externen Quelle an der Einspeisung bereitgestellte Versorgungsleistung, dann kann die Leistungsregeleinheit beispielsweise die Leitungsaufnahme des Vorschubantriebs reduzieren (bzw. dort weniger elektrische Leistung bereitstellen) während die Leistungsaufnahme des Rotationsantriebs beibehalten wird. Spannungsspitzen können aber auch durch Bereitstellen der Pufferleistung durch die Speichereinheit ausgeglichen werden. So kann die Horizontalbohranlage auch dann effektiv eingesetzt werden, wenn durch externe Quellen nur unzureichend elektrische Leistung bereitgestellt wird.

Vorzugsweise umfasst die Horizontalbohranlage einen Grundrahmen, wobei die Speichereinheit am Grundrahmen angeordnet ist. Bevorzugt ist die Speichereinheit zumindest teilweise von dem Grundrahmen umschlossen. Vorzugsweise umschließt der Grundrahmen die Speichereinheit zumindest auf vier Seiten. Eine vom Grundrahmen umschlossene Speichereinheit wird durch den Grundrahmen vor Beschädigungen geschützt. Eine Speichereinheit hat in der Regel ein hohes Eigengewicht, sodass durch die Anordnung der Speichereinheit am Grundrahmen eine vorteilhafte Gewichtsverteilung der Horizontalbohranlage erreicht werden kann. Der Grundrahmen kann den Bohrmast tragen. Das Fahrwerk der Horizontalbohranlage ist vorzugsweise seitlich am Grundrahmen angebracht.

In einer bevorzugten Ausführungsform umfasst die elektrische Horizontalbohranlage ein Gestängemagazin zur Aufnahme von Bohrstangen. Das Bohrgestänge ist aus zumindest einer Bohrstange gebildet und kann im Betrieb durch Ansetzen weiterer Bohrstangen verlängert werden. Das Gestängemagazin dient zum Bevorraten von Bohrstangen bevor diese an das Bohrgestänge angesetzt werden. Vorzugsweise umfasst das Gestängemagazin eine elektrische Ladevorrichtung zum Bereitstellen von Bohrstangen an dem Vorschubschlitten. Die elektrische Ladevorrichtung kann beispielsweise ein Ladearm sein, der dazu ausgebildet ist, Bohrstangen aus dem Gestängemagazin zu entnehmen und an dem Vorschubschlitten bereitzustellen. Die Bohrstangen können dann an das am Vorschubschlitten geführte Bohrgestänge angesetzt werden. Eine elektrische Ladevorrichtung kann effizient und/oder geräuscharm betrieben werden.

Vorzugsweise umfasst die elektrische Horizontalbohranlage ferner eine Verankerungsanordnung, die an einem Arbeitsende des Bohrmastes vorgesehen ist, wobei die Verankerungsanordnung zumindest einen Bodenanker zum Verankern der Horizontalbohranlage an einem Einsatzort aufweist. Das Arbeitsende des Bohrmastes ist das dem Bohrwerkzeug zugewandte Ende des Bohrmastes. Die Verankerungsanordnung ist dazu vorgesehen, ein Verschieben der Horizontalbohranlage gegenüber dem Untergrund zu verhindern. Der Bodenanker verankert die Horizontalbohranlage am Einsatzort und leitet aus dem Bohrvorgang resultierende und auf die Bohranlage wirkende Reaktionskräfte in den Untergrund ein. Beispielsweise kann der Bodenanker Reaktionskräfte, die aus dem Vorschub des Bohrgestänges resultieren, aufnehmen. Vorzugswiese ist der Bodenanker zumindest teilweise elektrisch antreibbar. Hierfür kann ein elektrischer Ankerantrieb vorgesehen sein. Beispielsweise und bevorzugt kann eine Verankerungsanordnung zumindest einen Erdanker aufweisen, der dazu vorgesehen ist, in den Untergrund gebohrt zu werden, um die Verankerungsanordnung im Untergrund zu verankern. Zumindest ein Bohrantrieb eines solchen Ankers kann ein elektrischer Antrieb sein. Zusätzlich kann ein hydraulischer oder elektrischer Ankervorschub vorgesehen sein. Wenn der Bodenanker elektrisch antreibbar ist, dann kann zumindest für einen Teil der Verankerungsanordnung auf ein Hydraulikaggregat verzichtet werden, wodurch die Komplexität der Horizontalbohranlage reduziert sein kann.

Bevorzugt weist die elektrische Horizontalbohranlage einen zweiten elektrischen Rotationsantrieb auf, wobei eine von dem zweiten elektrischen Rotationsantrieb angetriebene zweite Bohrachse vorzugsweise konzentrisch zu einer von dem Rotationsantrieb angetriebenen ersten Bohrachse in der ersten Bohrachse angeordnet ist. Alternativ kann die von dem Rotationsantrieb angetriebene erste Bohrachse konzentrisch zu der von dem zweiten Rotationsantrieb angetriebenen zweiten Bohrachse in der zweiten Bohrachse angeordnet sein. Beispielsweise und bevorzugt kann der erste Rotationsantrieb zum Antreiben eines Außenrohres eines Bohrgestänges vorgesehen sein, wobei der zweite Rotationsantrieb zum Antreiben eines Bohrkopfs oder eines Bohrmeißels vorgesehen ist, der in dem Außenrohr angeordnet ist. Dies kann insbesondere vorteilhaft sein, um bei Bohrungen in Festgestein die Borrichtung ändern zu können.

In einer bevorzugten Ausgestaltung ist der Rotationsantrieb über ein Bohrgetriebe mit dem Bohrgestänge verbunden. Das Bohrgetriebe kann eine Übersetzung oder eine Untersetzung bereitstellen, sodass eine Gestängedrehzahl des Borgestänges von einer Antriebsdrehzahl des Rotationsantriebs verschieden sein kann. Vorzugsweise ist zumindest der Rotationsantrieb und/oder das Bohrgetriebe modular auf dem Vorschubschlitten angeordnet. Ein modularer Rotationsantrieb und ein modulares Bohrgetriebe können vergleichsweise einfach ausgetauscht oder ersetzt werden. Vorzugsweise sind der Rotationsantrieb und/oder das Bohrgetriebe derart modular auf dem Vorschubschlitten angeordnet, dass auf dem Vorschubschlitten ein Montageplatz für einen weiteren Antrieb freigehalten wird.

Durch das Freihalten eines Montageplatzes kann ein weiterer Antrieb auf dem Vorschubschlitten angeordnet werden, ohne eine Einbauposition des Rotationsantriebs verändern zu müssen.

Gemäß einer besonders bevorzugten Ausführungsform ist die elektrische Horizontalbohranlage so ausgebildet, dass ein modularer Felsbohrantrieb zum Antreiben eines Felsbohrwerkzeugs auf dem Vorschubschlitten nachrüstbar ist. Eine modulare Anordnung des Rotationsantriebs und des Bohrgetriebes auf dem Vorschubschlitten ermöglicht ein Nachrüsten eines Felsbohrantriebs ohne Modifikation der Position des Rotationsantriebs. Vorzugsweise kann das Bohrgetriebe beim Nachrüsten des Felsbohrantriebs durch ein modulares Bohrgetriebe mit Felsbohrübersetzung ersetzt werden.

Vorzugsweise ist ein Felsbohrantrieb zum Antreiben eines Felsbohrwerkzeugs, insbesondere ein elektrischer Felsbohrantrieb, auf dem Vorschubschlitten angeordnet. Der Felsbohrantrieb ist vorzugsweise ein modularer Felsbohrantrieb. Das Felsbohrwerkzeug ist vorzugsweise in und/oder an dem Bohrgestänge geführt.

In einer bevorzugten Weiterbildung weist das Bohrgetriebe der Horizontalbohranlage eine erste Antriebswelle, eine zweite Antriebswelle, eine erste Abtriebswelle und eine zweite Abtriebswelle auf. Die erste Abtriebswelle ist über die erste Antriebswelle antreibbar, wobei eine Übersetzung oder Untersetzung vorgesehen sein kann. Analog ist die zweite Abtriebswelle über die zweite Antriebswelle antreibbar. Auch zwischen der zweiten Abtriebswelle und der zweiten Antriebswelle kann eine Übersetzung oder eine Untersetzung vorgesehen sein. Der Rotationsantrieb des Bohrantriebs ist vorzugsweise mit der ersten Antriebswelle verbunden. Das Bohrgestänge ist bevorzugt mit der ersten Abtriebswelle verbunden. Vorzugsweise ist der Felsbohrantrieb mit der zweiten Antriebswelle verbunden und das Felsbohrwerkzeug zumindest mittelbar mit der zweiten Abtriebswelle verbindbar. Beispielsweise kann ein Innengestänge vorgesehen sein, das die zweite Abtriebswelle mit dem Felsbohrwerkzeug verbindet. Die zweite Abtriebswelle ist vorzugsweise in der ersten Abtriebswelle angeordnet. Das Felsbohrwerkzeug kann dann in bzw. am Bohrgestänge geführt und dennoch individuell antreibbar sein.

Vorzugsweise umfasst die Horizontalbohranlage eine elektrische Spülpumpe, die über die Leistungselektronik mit elektrischer Energie versorgt werden kann, wobei die Spülpumpe vorzugsweise zumindest teilweise, bevorzugt vollständig, von der Speichereinheit mit elektrischer Energie versorgt werden kann. Die Spülpumpe ist zum Pumpen von Spülmedium ausgebildet. Das Spülmedium kann insbesondere zum Abtransport von Bohrmaterial aus dem Bohrloch verwendet werden. Die elektrische Spülpumpe umfasst bevorzugt einen elektrischen Spülpumpenantrieb. Die Spülpumpe ist vorzugsweise eine integrierte Spülpumpe, die an der Horizontalbohranlage angeordnet ist und mit dieser eine Einheit bildet. Durch die Integration der Spülpumpe wird das Umsetzen der Horizontalbohranlage erleichtert, da Arbeiten zum Bewegen einer externen Spülpumpe entfallen.

Bevorzugt weist die Horizontalbohranlage ein Hydraulikaggregat zum Bereitstellen von Hydraulikmedium unter Druck bereit. Das Hydraulikaggregat ist vorzugsweise ein elektrisches Hydraulikaggregat mit einer elektrisch angetriebenen Hydraulikpumpe. Das Hydraulikaggregat kann beispielsweise dazu vorgesehen sein, Hydraulikzylinder der Horizontalbohranlage mit Hydraulikmedium zu versorgen. Solche Hydraulikzylinder können beispielsweise zum Abstützen der Horizontalbohranlage auf dem Untergrund vorgesehen sein. Die Leistungselektronik ist vorzugsweise zum Versorgen des elektrischen Hydraulikaggregats und/oder der elektrischen Spülpumpe (bzw. deren jeweiliger Antrieb) mit elektrischer Energie vorgesehen. Bevorzugt sind das elektrische Hydraulikaggregat und/oder die elektrische Spülpumpe über den Zwischenkreis mit der Einspeisung und/oder der Speichereinheit verbunden.

In einer bevorzugten Ausführungsform einer elektrischen Horizontalbohranlage ist der Bohrantrieb, insbesondere der Vorschubantrieb des Bohrantriebs und/oder ein Rotationsantrieb des Bohrantriebs, zum Bereitstellen eines Dauer-Drehmoments ausgebildet und/oder zum Bereitstellen einer Dauer-Leistung ausgebildet. Ferner kann der Bohrantrieb, insbesondere der Vorschubantrieb des Bohrantriebs und/oder ein Rotationsantrieb des Bohrantriebs, zum Bereitstellen eines Boost-Drehmoments und/oder einer Boostleistung ausgebildet sein. Vorzugsweise umfasst die Horizontalbohranlage dann eine Bohrantriebssteuerung, die dazu ausgebildet ist, ein vom Bohrantrieb (insbesondere dem Vorschubantrieb und/oder Rotationsantrieb) bereitgestelltes Drehmoment auf das Dauer-Drehmoment und/oder eine vom Bohrantrieb (insbesondere dem Vorschubantrieb und/oder Rotationsantrieb) bereitgestellte Leistung auf die Dauerleistung zu begrenzen. Die Bohrantriebssteuerung kann dazu ausgebildet sein, eine Nutzeranforderung zu erfassen und in Antwort auf das Erfassen der Nutzeranforderung eine Begrenzung des bereitstellbaren Drehmoments bzw. der bereitstellbaren Leistung aufzuheben. Alternativ oder ergänzend kann die Bohrantriebssteuerung dazu ausgebildet sein, in Antwort auf das Erfassen der Nutzeranforderung ein vom Bohrantrieb (insbesondere dem Vorschubantrieb und/oder Rotationsantrieb) bereitstellbares Drehmoment und/oder eine vom Bohrantrieb (insbesondere dem Vorschubantrieb und/oder Rotationsantrieb) bereitstellbare Leistung bis zu einem das Dauer-Drehmoment übersteigenden Boost-Drehmoment und/oder einer die Dauerleistung übersteigenden Boost-Leistung freizugeben. Die Bohrantriebssteuerung ist vorzugsweise dazu ausgebildet, das bereitstellbare Drehmoment bzw. die bereitstellbare Leistung für einen vordefinierten Boost-Zeitraum bis zum Boost-Drehmoment bzw. bis zur Boost-Leistung freizugeben. Besonders bevorzugt ist die Bohrantriebssteuerung ferner dazu ausgebildet, zumindest eine Antriebstemperatur des Bohrantriebs, insbesondere eine Temperatur eines Elektromotors des Bohrantriebs und/oder eine Elektroniktemperatur einer Leistungselektronik des Bohrantriebs, zu überwachen, und das bereitstellbare Drehmoment auf das Dauer-Drehmoment und/oder die bereitstellbare Leistung auf die Dauer-Leistung zu begrenzen, falls die Antriebstemperatur einen vordefinierten Antriebstemperaturgrenzwert übersteigt. Die Bohranlage kann hierfür zumindest einen geeigneten Temperatursensor aufweisen. Die Bohrantriebssteuerung kann dazu ausgebildet sein, eine Boostfunktion der Horizontalbohranlage, die durch Bereitstellen bzw. Erlauben eines das Dauer-Drehmoment übersteigenden Drehmoments und/oder einer die Dauerleistung übersteigenden Leistung erreicht wird, zu beenden, falls die Antriebstemperatur den Antriebstemperaturgrenzwert überschreitet. Die zulässige Dauerleistung ist die maximale Leistung, mit der der Bohrantrieb dauerhaft ohne über ein normales Maß hinausgehenden Verschleiß und/oder ohne erhöhtes Risiko thermischer Schäden betrieben werden kann. Alternativ oder ergänzend kann der Bohrantrieb auch ein zulässiges Dauer-Drehmoment aufweisen, das der Bohrantrieb dauerhaft ohne über ein normales Maß hinausgehenden Verschleiß und/oder ohne erhöhtes Risiko thermischer Schäden bereitstellen kann. Eine Nutzeranforderung kann insbesondere durch einen Bediener der Bohranlage an einer Mensch-Maschine-Schnittstelle, insbesondere einem Knopf, Schalter, Touchscreen oder dergleichen bereitgestellt werden. Bei einer vollautomatischen Bohranlage kann auch eine autonome Steuereinheit die Nutzeranforderung bereitstellen.

Das Boost-Drehmoment beträgt vorzugsweise 110 % oder mehr, bevorzugt 120% oder mehr, bevorzugt maximal 125%, bevorzugt maximal 133%, bevorzugt maximal 140% des Dauer-Drehmoments. Die Boostleistung beträgt vorzugsweise 110 % oder mehr, bevorzugt 120% oder mehr, bevorzugt maximal 125%, bevorzugt maximal 133%, bevorzugt maximal 140% der Dauerleistung. Der Boost-Zeitraum hat vorzugsweise eine maximale Dauer von 1 Stunde oder weniger, vorzugsweise 50 min oder weniger, vorzugsweise 45 min oder weniger, vorzugsweise 40 min oder weniger, vorzugsweise 35 min oder weniger, besonders bevorzugt 30 min oder weniger. Auch dann, wenn die Antriebstemperatur den Antriebstemperaturgrenzwert während des Boost-Zeitraums nicht erreicht oder übersteigt, kann die Bohrantriebssteuerung vorzugsweise dazu ausgebildet sein, das bereitstellbare Drehmoment auf das Dauer-Drehmoment bzw. die bereitstellbare Leistung auf die Dauerleistung zu begrenzen, wenn der Boost-Zeitraum abgelaufen ist. Dies bietet den Vorteil, dass die Boostfunktion durch erneute Nutzeranforderung freigegeben werden muss und die Horizontalbohranlage nicht vorsorglich dauerhaft außerhalb der Dauerleistung bzw. dem Dauer-Drehmoment betrieben wird.

Das kurzfristige Bereitstellen einer Boostfunktion bietet mehrere Vorteile. So umfasst ein vollelektrischer Bohrantrieb in der Regel und bevorzugt zumindest einen Elektromotor und zumindest eine zugehörige Leistungselektronik. Die mittels eines solchen Bohrantriebs dauerhaft bereitstellbaren Drehmomente und/oder Leistungen können begrenzt sein. Beispielsweise kann der Vorschubantrieb des Bohrantriebs einer Horizontalbohranlage zum Bereitstellen eines Vorschub-Dauer-Drehmoments von 10.000 Nm ausgebildet sein. Dieses Vorschub-Dauer-Drehmoment kann der Vorschubantrieb von äußeren Einflüssen dauerhaft bereitstellen, ohne zu überhitzen. Im vorstehenden Beispiel kann der Vorschubantrieb beispielsweise dazu ausgebildet sein, ein Vorschub-Boost-Drehmoment von 12.000 Nm bereitzustellen. Dabei kann der Vorschubantrieb jedoch stärker belastet sein, sodass dessen Temperatur sich erhöht solange das Vorschub-Boost-Drehmoment bereitgestellt wird. Das Risiko thermischer Schäden ist daher gegebenenfalls erhöht, solange das Vorschub-Boost-Drehmoment bereitgestellt wird. Das bevorzugte Überwachen der Antriebstemperatur durch die Bohrantriebssteuerung hilft, Schäden zu verhindern. Das Bereitstellen eines Vorschub-Boost-Drehmoments ist beispielsweise dann vorteilhaft, wenn bei einem auf das Erstellen einer Pilotbohrung folgenden Einzug eines Rohres das Leer- bzw. Produktrohr im Bohrloch stecken bleibt. Der Vorschubantrieb treibt den Vorschubschlitten an. Das Vorschubdrehmoment resultiert in einer vom Vorschubschlitten auf das Bohrgestänge übertragbaren Kraft. Wenn der Vorschubantrieb kurzfristig ein Vorschub-Boost-Drehmoment bereitstellen kann, dann resultiert dies in einer erhöhten Vorschubkraft auf das Bohrgestänge, sodass gegebenenfalls Widerstände überwunden werden können und/oder ein festsitzendes Bohrgestänge gelöst werden kann.

Statische Komponenten der Horizontalbohranlage, insbesondere ein Grundrahmen und/oder Bohrmast der Horizontalbohranlage, sind vorzugsweise so ausgelegt, dass diese den mechanischen Lasten widerstehen können, die beim Bereitstellen der Boostleistung und/oder beim Bereitstellen des Boost-Drehmoments auf die betreffenden statischen Komponenten wirken. Die statischen Komponenten können insbesondere so ausgelegt sein, dass sie den beim Betreiben des Bohrantriebs mit Boostleistung auf sie wirkenden mechanischen Lasten widerstehen können, wenn für einen maximalen Anteil an der Gesamtnutzungsdauer der Bohranlage von 5% oder weniger eine Boostleistung und/oder ein Boost-Drehmoment bereitgestellt wird (beispielsweise für maximal 4 Betriebsstunden pro Jahr) und/oder pro Betriebsstunde ein maximaler Boostzeitraum von 10 min oder weniger, insbesondere 5 min oder weniger, eingehalten wird. Der Bohrantrieb ist zum kurzfristigen Betreiben bei Boostleistung und/oder zum kurzfristigen Bereitstellen des Boost-Drehmoments geeignet. Die elektrischen Leistungskomponenten können also kleiner und damit kostengünstiger ausgebildet sein. Dennoch können kurzfristig höhere Leistungen und/oder Drehmomente am Bohrantrieb bzw. höhere Kräfte an den angetriebenen Komponenten abgerufen werden, ohne Schäden an den statischen Komponenten zu riskieren. Dies ist vorteilhaft, da im Bohrbetrieb in der Regel nur selten die maximalen Bohrleistungen von Horizontalbohranlagen abgerufen werden. In der bevorzugten Weiterbildung können Spitzen der benötigten Bohrleistung durch die Boostleistung und/oder das Boost-Drehmoment ausgeglichen werden und es kann eine insgesamt kleiner dimensionierte und kostengünstiger einsetzbare Horizontalbohranlage zum Bewältigen der Bohraufgabe eingesetzt werden als üblich.

Gemäß einer alternativen oder ergänzenden Ausführungsform weist der Bohrantrieb eine Dauerleistung auf und die Horizontalbohranlage weist eine Bohrantriebssteuerung auf, die dazu ausgebildet ist, den Bohrantrieb in einem Boostzeitraum zum Bereitstellen einer die Dauerleistung übersteigenden Boostleistung anzusteuern, wobei die Boostleistung vorzugsweise 120% oder mehr der Dauerleistung beträgt; und/oder der Bohrantrieb weist ein Dauer-Moment auf und die Horizontalbohranlage weist eine Bohrantriebssteuerung auf, die dazu ausgebildet ist, den Bohrantrieb in einem Boostzeitraum zum Bereitstellen eines das Dauer-Moment übersteigenden Boost-Moments anzusteuern, wobei das Boost-Moment vorzugsweise 120% oder mehr des Dauer-Moments beträgt.

Gemäß einem zweiten Aspekt löst die Erfindung die eingangs genannte Aufgabe mit einem System umfassend einen Lastkraftwagen und eine Bohranlage nach einer der vorstehend beschriebenen Ausführungsformen des ersten Aspekts der Erfindung. Der Lastkraftwagen umfasst vorzugsweise einen Fahrantriebsmotor und einen Generator. Der Fahrantriebsmotor kann beispielsweise ein Dieselmotor des Lastkraftwagens sein. Der Generator ist vorzugsweise zumindest mittelbar durch den Fahrantriebsmotor antreibbar. Der Fahrantriebsmotor kann also nicht nur zum Bewegen des Fahrzeugs, sondern auch zum Antreiben des Generators genutzt werden. Vorzugsweise ist der Generator dazu ausgebildet, die Horizontalbohranlage mit elektrischer Energie zu versorgen. Durch die Integration des Generators in einen Lastkraftwagen kann besonders einfach eine externe Energieversorgung für die Horizontalbohranlage bereitgestellt werden. Bevorzugt umfasst das System ferner einen Transportanhänger zum Transportieren der Horizontalbohranlage, wobei der Transportanhänger für den Transport der Horizontalbohranlage mit dem Lastkraftwagen verbindbar ist. Ein Vorteil des Systems, das einen Fahrantrieb des Lastkraftwagens zum Antreiben des Generators nutzt, besteht in dem geringen Gesamtgewicht bzw. darin, dass ein zulässiges Gesamtgewicht des Fahrzeugzugs aus Lastkraftwagen und Transportanhänger (inkl. darauf angeordneter Horizontalbohranlage) eingehalten werden kann. So kann durch die Nutzung des Fahrantriebs des Lastkraftwagens auf einen separaten Antrieb für den Generator, beispielsweise einen separaten Dieselmotor, verzichtet werden. Der Generator kann ferner dazu vorgesehen sein, eine Peripherie der Horizontalbohranlage mit elektrischer Energie zu versorgen. Die Peripherie der Horizontalbohranlage kann insbesondere eine Mischanlage zum Bereitstellen von Spülmedium sein oder umfassen. Die Mischanlage ist vorzugsweise Teil des Systems und kann insbesondere auf einer Ladefläche des Lastkraftwagens angeordnet sein.

Es soll verstanden werden, dass die Horizontalbohranlage gemäß dem ersten Aspekt der Erfindung und das System gemäß dem zweiten Aspekt der Erfindung gleiche und ähnliche Unteraspekte aufweisen können, wie sie insbesondere in den abhängigen Ansprüchen zur Horizontalbohranlage gemäß dem ersten Aspekt der Erfindung niedergelegt sind. Für das System wird daher vollumfänglich auf vorstehende Ausführungen zur Horizontalbohranlage gemäß dem ersten Aspekt der Erfindung verwiesen. Es soll jedoch verstanden werden, dass das System auch für Horizontalbohranlagen bevorzugt ist, deren Leistungselektronik nicht dazu ausgebildet ist, elektrische Energie zu rekuperieren.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: eine perspektivische Darstellung eines ersten Ausführungsbeispiels einer elektrischen Horizontalbohranlage;
- Fig. 2: eine Ansicht auf die Horizontalbohranlage von unten;
- Fig. 3: eine schematische Darstellung einer Leistungselektronik einer elektrischen Horizontalbohranlage;
- Fig. 4a, 4b: Diagramme, welche Energiebilanzen einer elektrischen Horizontalbohranlage illustrieren;
- Fig. 5: ein Diagramm, das einen zeitlichen Verlauf einer von einer elektrischen Horizontalbohranlage aufgenommene elektrischen Energie illustriert;
- Fig. 6: ein Diagramm, das einen zeitlichen Verlauf einer Rotationsenergie illustriert;
- Fig. 7: eine schematische Darstellung eines Thermomanagementsystems einer elektrischen Horizontalbohranlage;
- Fig. 8: eine perspektivische Darstellung eines zweiten Ausführungsbeispiels einer elektrischen Horizontalbohranlage;
- Fig. 9: eine perspektivische Darstellung eines Vorschubschlittens der elektrischen Horizontalbohranlage gemäß dem zweiten Ausführungsbeispiel;
- Fig. 10: ein Diagramm, das einen zeitlichen Verlauf eines von einer elektrischen Horizontalbohranlage bereitgestellten Drehmoments illustriert; und in
- Fig. 11: eine schematische Seitenansicht auf ein System umfassend einen Lastkraftwagen, einen Transportanhänger und eine elektrische Horizontalbohranlage gemäß dem zweiten Ausführungsbeispiel.

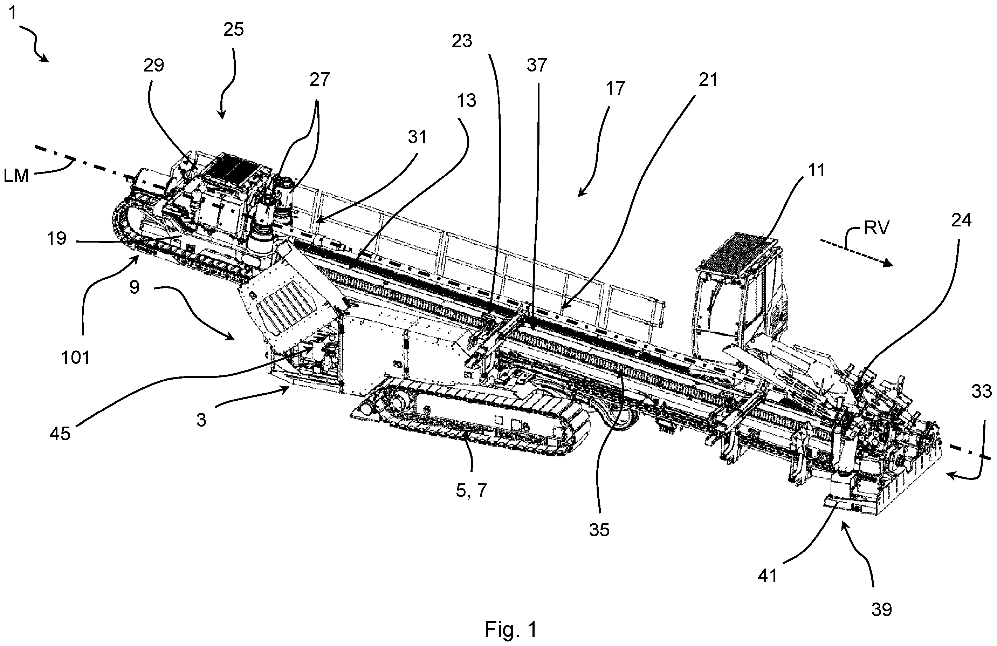

Eine in Fig. 1 dargestellte elektrische Horizontalbohranlage 1 gemäß einem ersten Ausführungsbeispiel umfasst einen Grundrahmen 3, an dem ein Fahrwerk 5 angebracht ist. Das Fahrwerk 5 ist hier als elektrisch angetriebenes Raupenfahrwerk 7 ausgeführt. Der Grundrahmen 3 bildet ferner eine Anlagenplattform 9, die eine Vielzahl von Komponenten der Horizontalbohranlage 1 trägt. Eine Bedienkabine 11 ist seitlich an der Anlagenplattform 9 angebracht. Von der Bedienkabine 11 kann ein Bediener die Horizontalbohranlage 1 steuern. Durch die seitliche Anordnung der Bedienkabine 11 ist ein Blick auf einen Bohrmast 13 der Horizontalbohranlage 1 frei. Der Bohrmast 13 ist schwenkbar an dem Grundrahmen 3 angeordnet und kann zwischen einer Transportstellung und einer errichteten Stellung 17, in der der Bohrmast 13 gegenüber dem Fahrwerk 5 und in der Regel auch dem Untergrund geneigt ist, verfahren werden. Das Bewegen des Bohrmasts 13 von der Transportstellung in die errichtete Stellung 17 wird auch als Errichten bezeichnet.

Auf dem Bohrmast 13 ist ein Vorschubschlitten 19 verschieblich angeordnet. Der Vorschubschlitten 19 dient zur Führung eines Bohrgestänges 21. Zur weiteren Abstützung des Bohrgestänges 21 ist an einem Arbeitsende des Bohrmastes 13 eine Gestängeführung 23 vorgesehen. Das Bohrgestänge 21 dient zum Schaffen eines Bohrlochs, das dann für die Verlegung von Leitungen genutzt werden kann. Hierfür wird das Bohrgestänge 21 von der Horizontalbohranlage 1 in den Untergrund getrieben, wobei an einer der Horizontalbohranlage 1 abgewandten Seite des Bohrgestänges 21 ein Bohrwerkzeug vorgesehen sein kann. Zum Antreiben des Bohrgestänges 21 umfasst die Horizontalbohranlage 1 einen Bohrantrieb 25. Der Bohrantrieb 25 ist auf dem Vorschubschlitten 19 angeordnet und umfasst vorzugsweise einen Vorschubantrieb 27 und einen Rotationsantrieb 29.

Eine erste Abtriebswelle 31 des Bohrantriebs 25 ist mit einem dem Bohrwerkzeug gegenüberliegenden Ende des Bohrgestänges 21 verbindbar. Der Rotationsantrieb 29 ist dazu ausgebildet, ein mit der Abtriebswelle 31 verbundenes Bohrgestänge 21 in Drehung zu versetzen bzw. rotatorisch anzutreiben. Der Vorschubantrieb 27 ist zum Verschieben des Bohrgestänges 21 in dessen Längsrichtung vorgesehen. Das mit dem Bohrantrieb 25 verbundene Bohrgestänge 21 kann durch Verfahren des Vorschubschlittens 19 in einer Vorschubrichtung RV in Längsrichtung verschoben werden. Hierfür bewegt sich der Vorschubschlitten 19 auf die an einem Arbeitsende 33 des Bohrmastes 13 angeordnete Gestängeführung 23 zu. Der Vorschubantrieb 27 treibt diese Bewegung des Vorschubschlittens 19 und somit indirekt auch die als Vorschub bezeichnete Längsverschiebung des Bohrgestänges 21 an. Im gezeigten Ausführungsbeispiel greift ein mit dem Vorschubantrieb 27 verbundenes und vom Vorschubantrieb 27 rotatorisch antreibbares Zahnrad in einen entsprechende Gegenverzahnung 35 an einer Schlittenführung 37 des Bohrmastes 13 ein. Durch Drehung des nicht gezeigten Zahnrades kann der Vorschubschlitten entlang der Schlittenführung 37 bewegt und so das Bohrgestänge 21 mittelbar angetrieben werden. Im in Fig.1 gezeigten Ausführungsbeispiel umfasst der Bohrantrieb 25 zwei Vorschubantriebe 27, die zum Antreiben des Vorschubschlittens 19 zusammenwirken. Es kann aber in anderen Ausführungsformen auch nur ein Vorschubantrieb 27 vorgesehen sein oder es können mehr als zwei Vorschubantriebe vorgesehen sein.

Die elektrische Horizontalbohranlage 1 umfasst ferner eine Brech- und Verschraubvorrichtung 24. Diese ist zum Verkontern und/oder Aufbrechen von Gewindeverbindungen zwischen den Bohrstangen des Bohrgestänges 21 und/oder zwischen Bohrgestänge 21 und Abtriebswelle 31 ausgebildet.

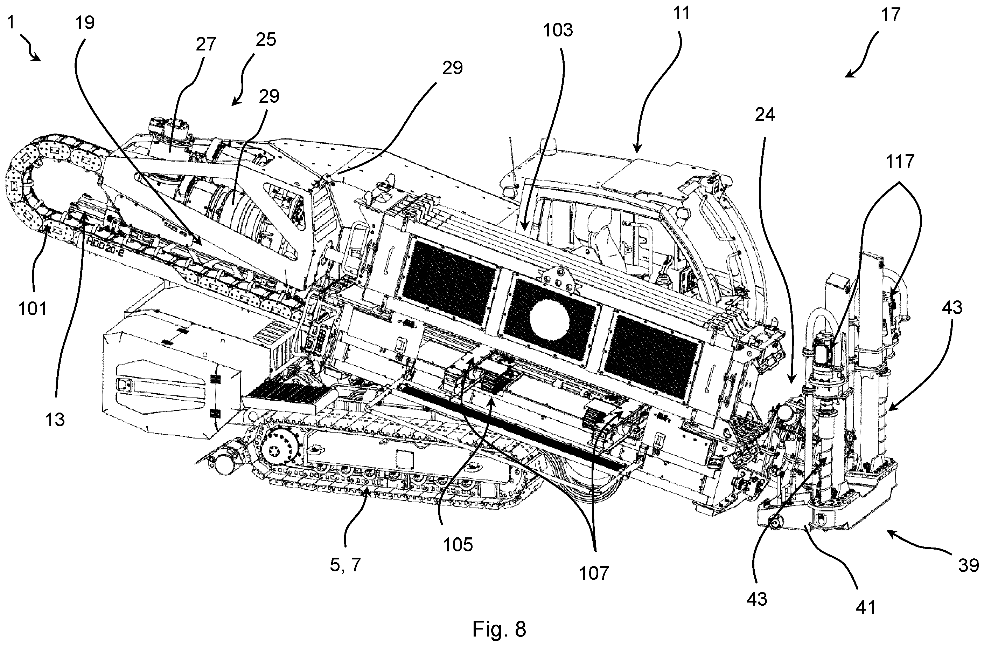

Am Arbeitsende 33 des Bohrmastes 13 ist eine Verankerungsanordnung 39 vorgesehen. Im in Fig. 1 gezeigten Ausführungsbeispiel umfasst die Verankerungsanordnung 39 eine Ankerplatte 41, über die sich die Horizontalbohranlage 1 im Betrieb auf dem Untergrund abstützt. In alternativen Ausgestaltungen, kann die Verankerungsanordnung 39 aber auch einen oder mehrere Bodenanker 43 aufweisen, die zum Verankern der Horizontalbohranlage 1 in den Untergrund eingedreht werden können (vgl. Fig. 8).

Die Horizontalbohranlage 1 umfasst ferner eine elektrische Spülpumpe 45. Das Bohrgestänge 21 ist hohl ausgebildet und ein Auslass der Spülpumpe 45 ist in nicht dargestellter Weise mit dem hohlen Bohrgestänge 21 verbindbar. Unter Verwendung der Spülpumpe 45 kann so ein Spülmedium unter hohem Druck von bis zu 100 bar, bevorzugt 3 bar bis 30 bar, durch das Bohrgestänge 21 in ein Bohrloch gepresst werden. Das Spülmedium ist beispielsweise ein Gemisch aus Wasser und Bentonit, das in einer Mischanlage 47 (in Fig. 1 nicht dargestellt) gemischt und über eine nicht dargestellte Schlauchverbindung an der Spülpumpe 45 bereitgestellt wird. Das unter Druck in das Bohrloch eingebrachte Spülmedium stabilisiert das Bohrloch und dient zum Abtransport von Bohrmaterial aus dem Bohrloch.

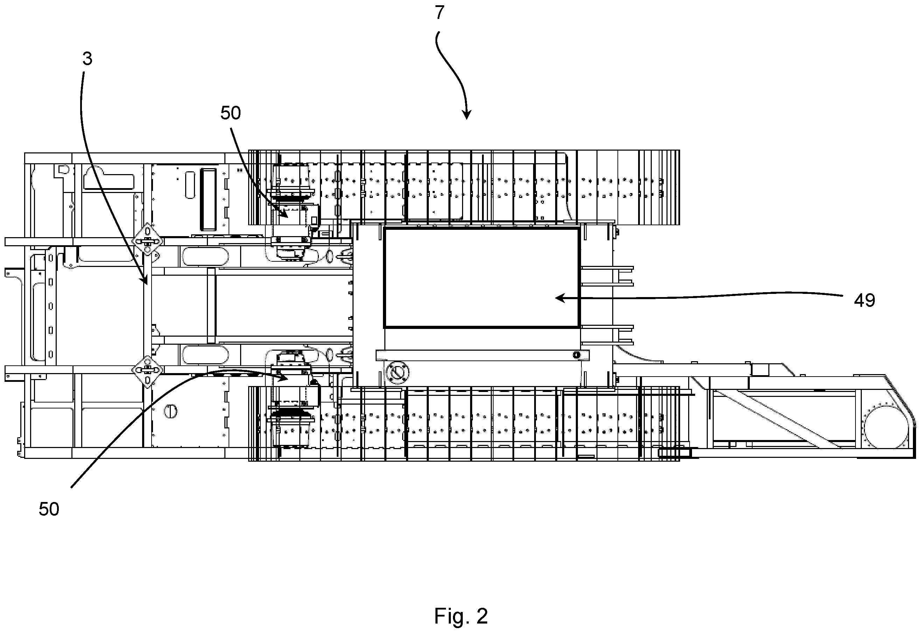

Fig. 2 zeigt ausschnittweise den Grundrahmen 3 der Horizontalbohranlage 1 mit einem Teil des Raupenfahrwerks 7. Mittig im Grundrahmen 3 zwischen den Raupenketten des Raupenfahrwerks 7 ist eine Speichereinheit 49 der elektrischen Horizontalbohranlage 1 angeordnet. Hier umfasst die Horizontalbohranlage 1 zwei elektrische Fahrantriebe 50. Je einer der als Elektromotoren ausgebildeten Fahrantriebe 50 ist zum Antreiben einer der Raupenketten des Raupenfahrwerks 7 vorgesehen.

Die Speichereinheit 49 ist dazu vorgesehen, zumindest einen Teil der elektrischen Horizontalbohranlage 1 mit elektrischer Energie zu versorgen. Die Horizontalbohranlage 1 ist im in Fig. 1 gezeigten ersten Ausführungsbeispiel eine vollelektrische Horizontalbohranlage 1. Sowohl die Fahrantriebe 50 als auch der Vorschubantrieb 27 und der Rotationsantrieb 29 sind als elektrische Antriebe ausgebildet. Insbesondere sind der Fahrantrieb 50 bzw. die Fahrantriebe 50, der Vorschubantrieb 27 und der Rotationsantrieb 29 als Direktantriebe ausgebildet, wobei Direktantriebe vorliegend Antriebe sind, die die jeweiligen Komponenten ohne Zwischenschaltung einer Hydraulik antreiben. Zwischen der angetriebenen Komponente und dem Direktantrieb kann aber beispielsweise ein Getriebe oder eine andere mechanische Kraftübertragungseinrichtung vorgesehen sein.

Im ersten Ausführungsbeispiel der Horizontalbohranlage 1 und bevorzugt sind sämtliche Antriebe der Horizontalbohranlage 1 elektrische Antriebe. Im gezeigten Ausführungsbeispiel ist auch ein Hydraulikaggregat der Horizontalbohranlage 1 elektrisch angetrieben. Das elektrisch angetriebene Hydraulikaggregat ist zum Betätigen von Hydraulikzylindern der Horizontalbohranlage 1 vorgesehen. Beispielsweise kann die Bedienkabine 11 unter Verwendung von Hydraulikzylindern bewegt werden. Es kann aber in anderen Varianten auch ein vollelektrischer Kabinenantrieb zum Schwenken der Bedienkabine 11 vorgesehen sein. Ein elektrisch angetriebenes Hydraulikaggregat kann alternativ oder ergänzend auch zum Errichten der Bohranlage vorgesehen sein. Beispielsweise kann der Bohrmast unter Verwendung von Hydraulikzylindern, die mit einem elektrischen Hydraulikaggregat verbunden sind, geschwenkt werden. Vorzugsweise sind zumindest die Hauptfunktionen der Horizontalbohranlage 1 vollelektrisch angetrieben. Antriebe der Hauptfunktionen sind insbesondere der Rotationsantrieb 29, der Vorschubantrieb 27, der Fahrantrieb 50 (bzw. die Fahrantriebe 50) und die Spülpumpe 45.

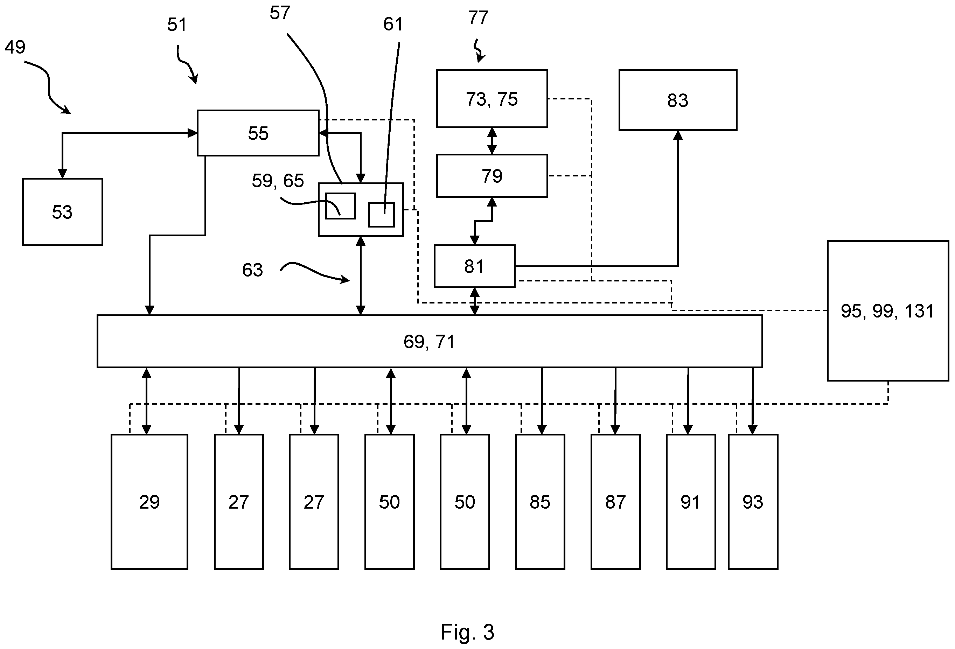

Fig. 3 illustriert vereinfacht eine Leistungselektronik 49 der elektrischen Horizontalbohranlage 1. Die Leistungselektronik 49 umfasst eine Einspeisung 51 zum externen Zuführen elektrischer Energie. Die Einspeisung 51 ist hier ferner zum Rückspeisen rekuperierter elektrischer Energie in ein externes Netz ausgebildet. Die Einspeisung 51 umfasst einen Anschluss 53, der in Fig. 3 ein Starkstromanschluss ist. Ferner umfasst die Einspeisung 51 einen Hauptschalter 55, der zum Unterbrechen einer leitenden Verbindung zwischen dem Anschluss 53 und weiteren Komponenten der Leistungselektronik 49 vorgesehen ist. Parallel zum Anschluss 53 kann ein weiterer Anschluss vorgesehen sein, der wiederrum mit einem zweiten Hauptschalter verbunden ist.

In einer Stromlaufrichtung, die hier von der Einspeisung 51 zu Verbrauchern, wie dem Rotationsantrieb 29 und dem Vorschubantrieb 27, verläuft, umfasst die Einspeisung 51 im gezeigten Ausführungsbeispiel ferner eine Stromrichtereinheit 57. Die Stromrichtereinheit 57 umfasst einen Stromrichter 59 und eine Filtereinheit 61. Der Stromrichter 59 ist dazu ausgebildet, von einer externen Quelle an der Einspeisung 51 bzw. dem Anschluss 53 bereitgestellte Wechselspannung in Gleichspannung zu wandeln und an einem Zwischenkreisanschluss 63 der Einspeisung 51 bereitzustellen. In diesem Fall wirkt der Stromrichter 59 also als Gleichrichter. Ferner ist der Stromrichter 59 dazu ausgebildet, am Zwischenkreisanschluss 63 bereitgestellte Gleichspannung in Wechselspannung zu wandeln und an dem Anschluss 53 bereitzustellen und wirkt in solchen Fällen als Wechselrichter.

Im gezeigten Ausführungsbeispiel ist der Stromrichter 59 ein sogenannter Active-Front-End-Umrichter 65. Die Ausgestaltung der Stromrichtereinheit 57 mit Active-Front-End-Umrichter 65 und Filtereinheit 61 erlaubt bei geringen elektromagnetischen Störungen eine Rückspeisung rekuperierter elektrischer Energie aus der Leistungselektronik 49 in ein externes Stromnetz.

Am Zwischenkreisanschluss 63 ist die Einspeisung 51 mit einem Zwischenkreis 69 der Leistungselektronik 49 verbunden. Der Zwischenkreis 69 ist im gezeigten Ausführungsbeispiel ein Hochvoltgleichspannungskreis 71 mit einem Spannungsniveau von etwa 750V. Der Zwischenkreis 69 kann aber in anderen Ausführungsformen auch ein anderes Spannungsniveau haben.

Der Zwischenkreis 69 verbindet die Einspeisung 51 mit einer Speichereinheit 73 der Leistungselektronik 49. Hier ist die Speichereinheit 73 eine Hochvoltbatterie 75 (HV-Batterie). Im gezeigten Ausführungsbeispiel ist die HV-Batterie 75 Teil einer Speicheranordnung 77. Neben der HV-Batterie 75 umfasst die Speicheranordnung 77 einen Batteriehauptschalter 79, der zum Unterbrechen einer leitenden Verbindung zwischen der HV-Batterie 75 und dem Zwischenkreis 69 ausgebildet ist. Ferner ist im Ausführungsbeispiel der Fig. 3 ein Wandler 81 vorgesehen. Der Wandler 81 ist dazu ausgebildet, das Gleichspannungsniveau zwischen dem Zwischenkreis 69 und der HV-Batterie 75 zu wandeln. So kann die HV-Batterie 75 bei einem vom Spannungsniveau des Zwischenkreises 69 verschiedenen Spannungsniveau betrieben werden. Beispielsweise kann ein Spannungsniveau der HV-Batterie 75 in einem Bereich von 100V bis 600V liegen, wodurch ein Wirkungsgrad und/oder eine Speicherkapazität der HV-Batterie 75 verbessert sein kann.

Die Leistungselektronik 49 der elektrischen Horizontalbohranlage 1 ist vorzugsweise dazu ausgebildet, elektrische Energie zu rekuperieren. Es soll verstanden werden, dass das eigentliche Rückgewinnen elektrischer Energie bzw. deren Einleitung in die Leistungselektronik 49 insbesondere durch elektrische Antriebe der Leistungselektronik 49, wie insbesondere dem Vorschubantrieb 27 und dem Rotationsantrieb 29 erfolgen kann. Beispielsweise kann der Rotationsantrieb 29 dazu ausgebildet sein, das Bohrgestänge 21 zu bremsen und die freiwerdende kinetische Energie des Bohrgestänges 21 in elektrische Energie umzuwandeln. Die elektrische Energie kann dann vom Rotationsantrieb 29 in den Zwischenkreis 69 abgegeben werden. Über den Zwischenkreis 69 kann die rekuperierte elektrische Energie zur Speicheranordnung 77 gelangen und in der Speichereinheit 73 gespeichert werden.

Die rekuperierte und in der Speichereinheit 73 gespeicherte elektrische Energie kann dann an einem oder mehreren Antrieben der elektrischen Horizontalbohranlage 1 bereitgestellt werden. Eine von der externen Quelle bezogene Energiemenge wird entsprechend reduziert und Kosten können eingespart werden. Die Energieeffizienz der elektrischen Horizontalbohranlage 1 kann gegenüber herkömmlichen Horizontalbohranlagen verbessert sein.

In einigen Betriebsfällen kann eine durch Rekuperieren zurückgewonnene Menge elektrischer Energie größer sein als eine Aufnahmefähigkeit der Speichereinheit 73 und/oder eine elektrische Rekuperationsleistung kann höher sein als eine Aufnahmeleistung der Speichereinheit 73. Um Schäden an der Speichereinheit 73 zu vermeiden und dennoch eine hohe Bremsleistung realisieren zu können, umfasst die Speicheranordnung 77 im gezeigten Ausführungsbeispiel ferner einen Bremswiderstand 83. Der Bremswiderstand 83 setzt elektrische Leistung in Wärme um und dissipiert so überschüssige elektrische Energie. In anderen Ausführungsbeispielen der elektrischen Horizontalbohranlage 1 kann der Bremswiderstand 83, die Speichereinheit 73 oder die gesamte Speicheranordnung 77 aber auch entfallen.

Der Zwischenkreis 69 ist ferner mit Verbrauchern der elektrischen Horizontalbohranlage 1 verbunden. Hier umfassen die Verbraucher den Rotationsantrieb 29, die beiden Vorschubantriebe 27, die Fahrantriebe 50 des Fahrwerks 5, einen Hydraulikantrieb 85, der beispielsweise zum Anheben und/oder Absenken des Bohrmastes 13 vorgesehen ist, und einen Thermomanagementantrieb 87 eines Thermomanagementsystems 89 der elektrischen Horizontalbohranlage 1. Als weiterer Verbraucher ist eine elektrische Spülpumpe 91 an den Zwischenkreis 69 angeschlossen. Es soll verstanden werden, dass alle dieser Verbraucher zum Rekuperieren elektrischer Energie ausgebildet sein können, aber nicht müssen. Zwischen einem oder mehreren der Verbraucher und dem Zwischenkreis 69 kann jeweils eine Steuerung und/oder ein anderes Zwischenelement vorgesehen sein. Beispielsweise können die beiden Vorschubantriebe 27 auch über eine gemeinsame Steuerung mit dem Zwischenkreis 69 verbunden sein. Zur Vereinfachung sind Zwischenelemente in Fig. 3 nicht dargestellt.

Der Zwischenkreis 69 kann ferner dazu vorgesehen sein, ein Niederspannungsbordnetz mit elektrischer Energie zu versorgen, wobei zu diesem Zweck ein entsprechender Spannungswandler zwischen dem Niederspannungsbordnetz und dem Zwischenkreis vorgesehen sein kann.

Die in Fig. 3 zur Verbindung der verschiedenen Elemente der Leistungselektronik 49 verwendeten Pfeile illustrieren die mögliche Flussrichtung von elektrischer Energie. Es soll jedoch verstanden werden, dass in anderen Ausführungsbeispielen auch andere Flussrichtungen vorgesehen sein können. In Fig. 3 illustriert ein Doppelpfeil, dass elektrische Energie entlang der entsprechenden Verbindung in beide Richtungen fließen kann. Ein einfacher Pfeil illustriert hingegen nur Stromfluss in eine Richtung. Beispielsweise ist in Fig. 3 ein Fluss elektrischer Energie von dem Wandler 81 hin zum Bremswiderstand 83 aber nicht vom Bremswiderstand 83 zum Wandler 81 vorgesehen.

Die Leistungselektronik 49 umfasst in dem gezeigten Ausführungsbeispiel ferner eine unmittelbare Verbindung zwischen dem Hauptschalter 55 der Einspeisung 51 und dem Zwischenkreis 69. Durch entsprechendes Schalten des Hauptschalters 55 kann der Anschluss 53 unmittelbar oder über die Stromrichtereinheit 57 mittelbar mit dem Zwischenkreis 69 verbunden werden. So kann die Stromrichtereinheit 57 beispielsweise dann umgangen werden, wenn eine externe Energiequelle, die an dem Anschluss 53 angeschlossen ist, Gleichspannung mit einem dem Spannungsniveau des Zwischenkreises 69 entsprechenden Spannungsniveau bereitstellt. Etwaige Leistungsverluste der Stromrichtereinheit 57 können so vermieden werden.

Fig. 3 illustriert, dass die Einspeisung 51 sowohl eine Versorgung der elektrischen Horizontalbohranlage 1 mit elektrischer Energie aus einer externen Quelle als auch das Rückspeisen rekuperierter elektrischer Energie in ein externes Netz erlaubt. Beispielsweise kann rekuperierte elektrische Energie, die nicht in der Speichereinheit 73 zwischengespeichert werden kann oder soll, in ein externes Stromnetz eingespeist werden. Ein Betreiber der elektrischen Horizontalbohranlage 1 kann dann ggf. eine Einspeisevergütung vom Netzbetreiber oder einem Energieversorger erhalten.

Im Ausführungsbeispiel gemäß Fig. 3 und bevorzugt sind der Rotationsantrieb 29 und die Fahrantriebe 50 des Fahrwerks 5 zum Rekuperieren elektrischer Energie ausgebildet. Durch das Beschränken der Rekuperationsfähigkeit auf nur einige, vorzugsweise leistungsstarke, Verbraucher kann die elektrische Horizontalbohranlage gegebenenfalls einfacher und kostengünstig ausgebildet werden.

Eine Speicherkapazität der Speichereinheit 73 und eine Leistungsabgabefähigkeit der Speichereinheit 73 sind vorzugsweise so gewählt, dass die Leistungselektronik 49 die Fahrantriebe 50 mit ausreichend elektrischer Energie versorgt werden können, um die elektrische Horizontalbohranlage 1 ohne externe Energieversorgung verfahren zu können. So kann die elektrische Horizontalbohranlage 1 beispielsweise auch dann auf einer Baustelle positioniert werden, wenn keine externe Energiequelle am Anschluss 53 angeschlossen ist. Dies kann das Einrichten einer Baustelle erleichtern und so Kosten sparen. Zudem kann die Horizontalbohranlage 1 auch dann bereits positioniert werden, wenn ein externer Generator noch nicht einsatzbereit ist.

Die Speicherkapazität der Speichereinheit 73 und die Leistungsabgabe der Speichereinheit 73 sind im gezeigten Ausführungsbeispiel ferner so gewählt, dass der Mastantrieb 93 des Bohrmastes 13 ohne externe Energieversorgung betrieben werden kann. Auch dies kann die Einsatzbereitschaft der Horizontalbohranlage 1 erhöhen. Ferner können der Vorschubantrieb 27 und/oder der Rotationsantrieb 29 zumindest in Teillast betrieben werden, wenn keine elektrische Energie von einer externen Quelle bereitgestellt wird. Dies ermöglicht beispielsweise ein Drehen des Rotationsantriebs 29 oder ein Verfahren des Vorschubschlittens 19 zu Wartungs- oder Reinigungszwecken, ohne dass eine externe Energiequelle am Anschluss 53 angeschlossen werden muss. Eine Wartung und/oder Reinigung der Horizontalbohranlage 1 kann so erleichtert werden.

Die elektrische Horizontalbohranlage 1 umfasst ferner eine Steuereinheit 95, die hier insbesondere zum Steuern der Leistungselektronik 49 und der Antriebe vorgesehen ist. Die Steuereinheit 95 ist über Steuerleitungen 97 mit den Komponenten der Leistungselektronik 49 verbunden. In anderen Ausgestaltungen muss die Steuereinheit 95 aber nicht mit allen Komponenten der Leistungselektronik 49 verbunden sein. Die Steuereinheit 95 ist hier eine Leistungsregeleinheit 99. Die Leistungsregeleinheit 99 regelt die Leistung eines oder mehrerer der elektrischen Antriebe der elektrischen Horizontalbohranlage 1, wie beispielsweise der Vorschubantriebe 27, des Rotationsantriebs 29 und der Fahrantriebe 50, und ist dazu ausgebildet, die Leitungsaufnahme und Leistungsabgabe der Speichereinheit 73 zu regeln. Wenn beispielsweise der Rotationsantrieb 29 zum Bremsen des Bohrgestänges 21 elektrische Energie rekuperiert, steuert die Leistungsregeleinheit 99 die Leistungselektronik 49 so an, dass die Speichereinheit 73 die rekuperierte elektrische Energie zwischenspeichert.

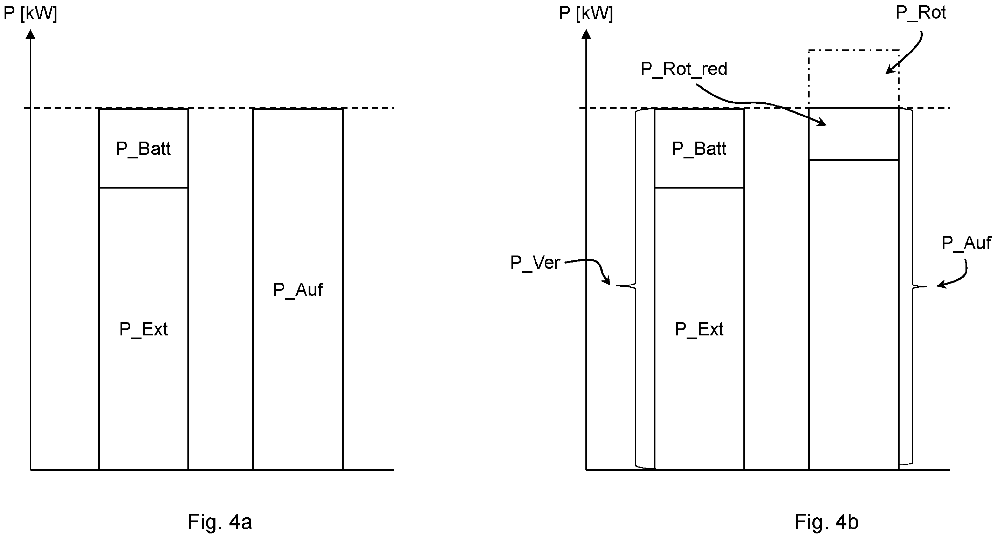

Die Leistungsregeleinheit 99 ist aber auch zum Leistungsmanagement der elektrischen Horizontalbohranlage 1 ausgebildet. Wenn beispielsweise der Bohrantrieb 25, im gezeigten Ausführungsbeispiel also die Vorschubantriebe 27 und der Rotationsantrieb 29, im Betrieb eine größere elektrische Aufnahmeleistung P_Auf benötigt als eine von einer externen Quelle bereitgestellte Versorgungsleistung P_Ext (vgl. Fig. 4a), so kann die Leistungsregeleinheit 99 die Speichereinheit 73 so ansteuern, dass diese eine der Differenzleistung P_Diff aus Aufnahmeleistung P_Auf und Versorgungsleistung P_Ext entsprechende Batterieleistung P_Batt bereitstellt. Die Speichereinheit 73 puffert die zusätzlich benötigte Leistung ab, sodass die Batterieleistung P_Batt auch als Pufferleistung bezeichnet werden kann.

Zudem ist die Leistungsregeleinheit 99 dazu ausgebildet, die Leistungsaufnahme eines oder mehrerer der Antriebe der elektrischen Horizontalbohranlage 1 zu reduzieren, falls die gesamte geforderte Aufnahmeleistung P_Auf der Horizontalbohranlage 1 größer ist als eine gesamte von der Speichereinheit 73 und der externen Quelle bereitgestellte Versorgungsleistung P_Ver. Im Ausführungsbeispiel gemäß Fig. 4b reduziert die Leistungsregeleinheit 99 eine aufgenommene elektrische Leistung des Rotationsantriebs P_Rot zu einer reduzierten aufgenommenen elektrischen Leistung des Rotationsantriebs P_Rot_red, um die gesamte Aufnahmeleistung P_Auf der elektrischen Horizontalbohranlage 1 an die gesamte Versorgungsleistung P_Ver anzupassen. Es soll verstanden werden, dass die Leistungsregeleinheit 99 auch die Leistungsaufnahme eines oder mehrerer anderer elektrischer Antriebe der elektrischen Horizontalbohranlage 1 reduzieren kann. Ferner kann die Leistungsregeleinheit 99 auch dazu ausgebildet sein, die von der Speichereinheit 73 bereitgestellte Batterieleistung P_Batt zu erhöhen und zeitgleich einen der Antriebe der elektrischen Horizontalbohranlage 1 so anzusteuern, dass sich dessen Leistungsaufnahme reduziert.

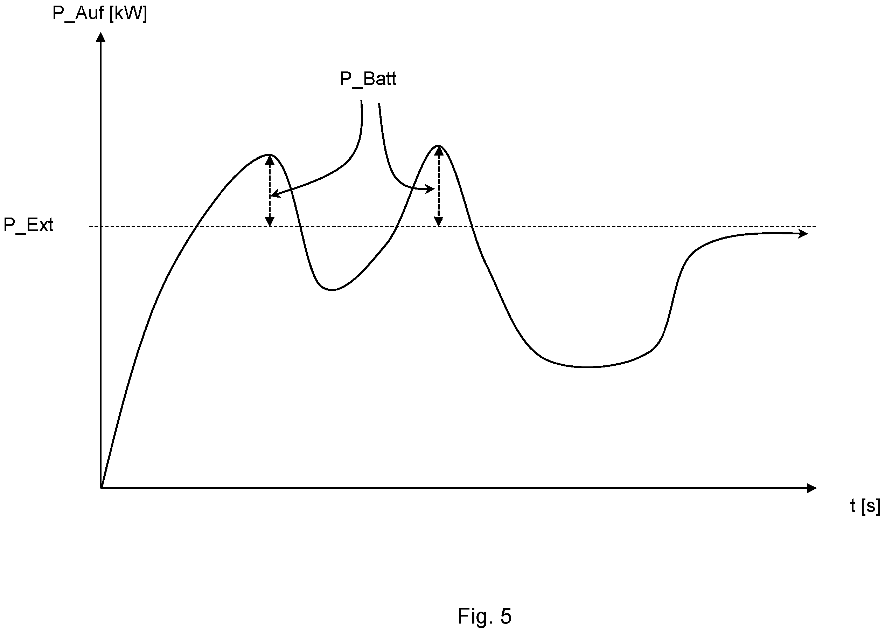

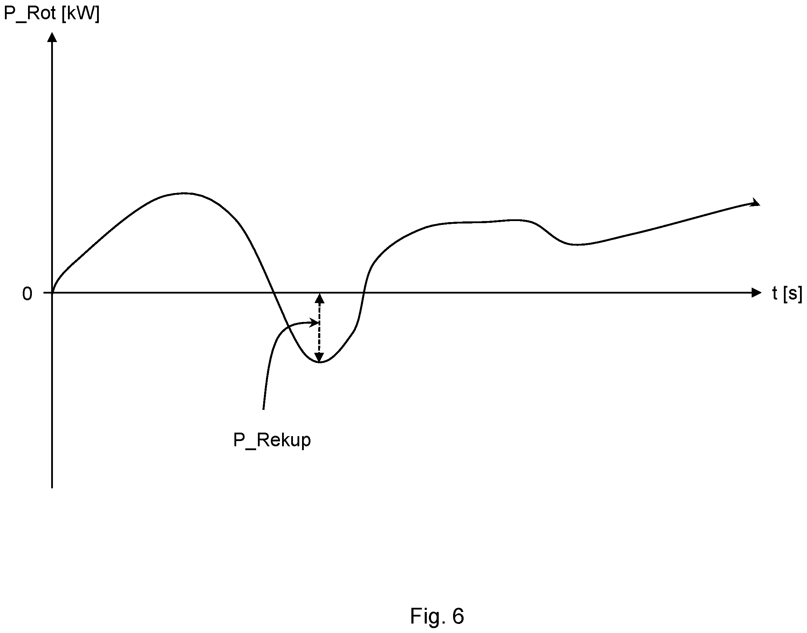

Die Darstellungen der Figuren 5 und 6 illustrieren einen zeitlichen Verlauf von Leistungen P. In Fig. 5 ist die gesamte Aufnahmeleistung P_Auf der elektrischen Horizontalbohranlage über die Zeit aufgetragen. Insbesondere bedingt durch Veränderungen im Untergrund, durch den die elektrische Horizontalbohranlage 1 bohrt, kann die Leistungsaufnahme des Bohrantriebs 25 starken zeitlichen Schwankungen unterliegen. Damit schwankt auch die gesamte elektrische Aufnahmeleistung P_Auf der elektrischen Horizontalbohranlage 1. Sobald die Aufnahmeleistung P_Auf der elektrischen Horizontalbohranlage 1 über der von einer externen Quelle bereitgestellten externen Versorgungsleistung P_Ext liegt, steuert die Leistungsregeleinheit 99 im gezeigten Ausführungsbeispiel die Speichereinheit 73 so, dass diese eine der Leistungsdifferenz entsprechende Batterieleistung P_Batt am Zwischenkreis 69 bereitstellt. Es soll verstanden werden, dass die Speichereinheit 73 aber nicht nur zum Ausgleichen von Leistungsspitzen genutzt werden kann. Beispielsweise kann auch konstant eine Batterieleistung P_Batt bereitgestellt und zum Ausgleich eine von der externen Quelle aufgenommene Leistung reduziert werden.

Fig. 6 illustriert beispielhaft einen zeitlichen Verlauf der Leistungsaufnahme P_Rot des Rotationsantriebs 29. In der Regel muss der Rotationsantrieb 29 zum Bohren Leistung auf das Bohrgestänge 21 übertragen. Wenn jedoch beispielsweise aufgrund einer Gefahrensituation, einer Veränderung des zu durchbohrenden Untergrunds oder aufgrund anderer Gegebenheiten das Bohrgestänge 21 rasch abgebremst werden bzw. dessen Drehzahl rasch reduziert werden muss, dann kann das Bohrgestänge 21 in der bevorzugten Ausgestaltung der elektrischen Horizontalbohranlage 1 gebremst und dabei elektrische Energie rekuperiert werden. Die zum Bremsen des Bohrgestänges 21 benötigte negative Leistung wird als Rekuperationsleistung P_Rekup in den Zwischenkreis 69 eingespeist. Von dort kann die Rekuperationsleistung P_Rekup dann in der Speichereinheit 73 zwischengespeichert und/oder über die Einspeisung 51 in ein externes Netz eingespeist werden.

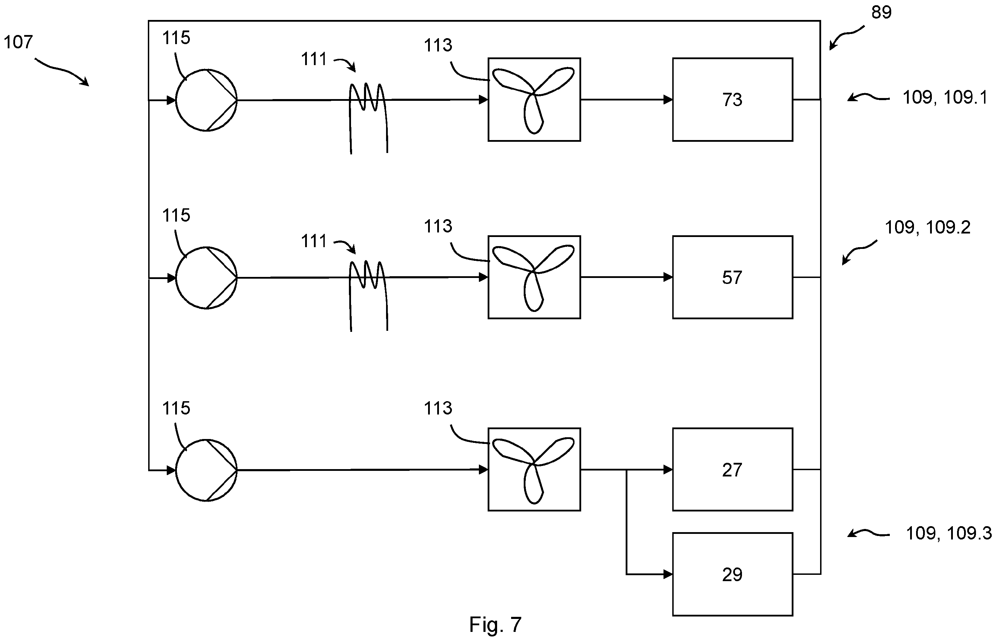

Fig. 7 illustriert ein Thermomanagementsystem 89 der elektrischen Horizontalbohranlage 1. Im gezeigten Ausführungsbeispiel ist das Thermomanagementsystem 89 ein flüssigkeitsbasiertes Thermomanagementsystem 89, das zum Kühlen und/oder Heizen von Komponenten der elektrischen Horizontalbohranlage ein flüssiges Kühl- bzw. Heizmedium verwendet. Hier umfasst das Thermomanagementsystem 89 beispielhaft drei Thermomanagementkreisläufe 109. Jeder der Thermomanagementkreisläufe 109 umfasst eine Pumpe 115 zum Zirkulieren des flüssigen Mediums. Ein erster Thermomanagementkreislauf 109.1 und ein zweiter Thermomanagementkreislauf 109.2 sind jeweils sowohl zum Kühlen als auch zum Heizen vorgesehen und umfassen daher je einen Kühler 111 und eine Heizvorrichtung 113. Ein dritter Thermomanagementkreislauf 109.3 ist zum Kühlen des Vorschubantriebs 27 und des Rotationsantriebs 29 vorgesehen und umfasst hier nur einen Kühler 111, aber keine Heizvorrichtung 113. Der erste Thermomanagementkreislauf 109.1 ist zum Temperieren der Speichereinheit 73 vorgesehen. Durch das Vorsehen eines gesonderten Thermomanagementkreislaufs 109.1 für die Speichereinheit 73 kann diese in einem optimalen Temperaturbereich betrieben werden, wodurch die Effizienz und/oder Speicherkapazität der Speichereinheit 73 erhöht sein kann. Der zweite Thermomanagementkreislauf 109.2 ist zum Temperieren der Stromrichtereinheit 57 vorgesehen, um Schäden zu vermeiden, die Lebensdauer zu erhöhen und/ oder deren Effizienz zu steigern. Alternativ oder ergänzend kann ein Thermomanagementkreislauf 109 zum Temperieren der Bedienkabine 11 bzw. des von der Bedienkabine 11 definierten Arbeitsraumes vorgesehen sein.

Es soll verstanden werden, dass das Thermomanagementsystem 89 auch weniger als drei (also nur einen oder zwei) oder mehr als drei Thermomanagementkreisläufe 109 umfassen kann. Ein Thermomanagementkreislauf 109 kann dabei zum Kühlen und/oder Heizen einer einzelnen Komponente oder Baugruppe der elektrischen Horizontalbohranlage 1 oder zum Kühlen und/oder Heizen mehrerer Komponenten oder Baugruppen der elektrischen Horizontalbohranlage 1 vorgesehen sein.

Fig. 8 zeigt eine perspektivische Ansicht eines zweiten Ausführungsbeispiels einer elektrischen Horizontalbohranlage 1. Im Vergleich zur elektrischen Horizontalbohranlage 1 gemäß dem in Fig. 1 dargestellten ersten Ausführungsbeispiel ist die elektrischen Horizontalbohranlage 1 gemäß dem zweiten Ausführungsbeispiel kompakter ausgebildet. So kann die in Fig. 8 gezeigte elektrische Horizontalbohranlage 1 beispielsweise bei beengten Platzverhältnissen und/oder dann eingesetzt werden, wenn eine geringere Bohrleistung benötigt wird. Mit Ausnahme der nachfolgend erläuterten Unterschiede, kann die elektrischen Horizontalbohranlage 1 gemäß Fig. 8 aber im Wesentlichen identisch zur elektrischen Horizontalbohranlage 1 gemäß Fig. 1 ausgebildet sein. Insbesondere die vorstehenden Ausführungen zur Leistungselektronik 49 gelten analog. Zur Vereinfachung werden daher im Folgenden für gleiche oder ähnliche Elemente die zur Beschreibung des ersten Ausführungsbeispiels verwendeten Bezugszeichen genutzt.

Auch im zweiten Ausführungsbeispiel umfasst die elektrischen Horizontalbohranlage 1 einen Grundrahmen 3, ein Fahrwerk 5, eine Bedienkabine 11, einen Bohrmast 13, einen Vorschubschlitten 19, eine Brech- und Verschraubvorrichtung 24 und eine Verankerungsanordnung 39. Der Bohrantrieb 25, der im zweiten Ausführungsbeispiel je einen Vorschubantrieb 27 und einen Rotationsantrieb 29 umfasst, ist auf dem Vorschubschlitten 19 angeordnet. Die elektrische Anbindung des Bohrantriebs 25 an den Zwischenkreis 69 erfolgt in beiden Ausführungsbeispielen über eine Schleppkette 101.

Im zweiten Ausführungsbeispiel umfasst die elektrische Horizontalbohranlage 1 ferner ein Gestängemagazin 103, das zur Aufnahme nicht benötigter Bohrstangen des Bohrgestänges 21 vorgesehen ist. Die Bohrstangen können so an der elektrischen Horizontalbohranlage 1 aufgenommen werden und müssen beim Verfahren der elektrischen Horizontalbohranlage 1 nicht gesondert gehandhabt werden. Während eines Bohrvorgangs können die Bohrstangen nach Bedarf aus dem Gestängemagazin 103 entnommen und an das Bohrgestänge 21 angefügt werden. Vorzugsweise umfasst die elektrische Horizontalbohranlage 1 eine elektrische Ladevorrichtung 105 zum Bereitstellen von Bohrstangen an dem Vorschubschlitten 19. Es soll verstanden werden, dass an dem Vorschubschlitten 19 bereitgestellte Bohrstangen nicht auf dem Vorschubschlitten angeordnet werden müssen. Wie beispielsweise in Fig. 1 gezeigt, kann eine erste Antriebswelle 31 des Bohrantriebs 25 auch vom Vorschubschlitten 19 hervorstehen. Das Bereitstellen von Bohrstangen an dem Vorschubschlitten 19 erfolgt dann gegebenenfalls so, dass die erste Antriebswelle 31 mit der von der elektrischen Ladevorrichtung 105 bereitgestellten Bohrstange koppelbar ist. In Fig. 8 ist die elektrische Stangenladevorrichtung 105 unter dem Gestängemagazin 103 angeordnet. Die Anordnung unter dem Gestängemagazin 103 erleichtert durch Schwerkraftwirkung das Entnehmen von Bohrstangen. Im gezeigten Ausführungsbeispiel ist die elektrische Stangenladevorrichtung 105 dazu ausgebildet, eine oder mehrere Bohrstangen von unten aus dem Gestängemagazin 103 zu entnehmen und diese quer zur Vorschubrichtung RV am Vorschubschlitten 19 bereitzustellen. Hierfür umfasst die elektrische Stangenladevorrichtung 105 hier zwei quer zur Vorschubrichtung RV verfahrbare Arme 107. Die Arme 107 sind simultan über eine Transmissionswelle antreibbar. Die Arme 107 sind vorzugsweise dazu ausgebildet, zum Entnehmen von Bohrstangen unter das Gestängemagazin 103 zu fahren. Eine dann auf den Armen 107 aufgenommene Bohrstange kann durch seitliches Verfahren der Arme 107 an dem Vorschubschlitten 19 bereitgestellt werden. Beispielsweise können die Arme 107 mitsamt der aus dem Gestängemagazin 103 entnommenen Bohrstange seitlich bzw. quer zur Vorschubrichtung RV zwischen die Vorschubschlitten 19 und die Gestängeführung 23 einfahren und so die Bohrstange axial zum Bohrgestänge 21 ausrichten. Es kann auch vorgesehen sein, dass die elektrische Stangenladevorrichtung 105 nur einen oder mehr als zwei quer zur Vorschubrichtung RV verfahrbare Arme 107 und/oder einen oder mehrere quer zur Vorschubrichtung RV verfahrbare Schlitten umfasst. Zumindest zwei Arme 107 können in bevorzugten Ausgestaltungen auch individuell bzw. unabhängig voneinander antreibbar sein.

Die elektrische Stangenladevorrichtung 105 kann zum vollautomatisierten Bereitstellen von Bohrstangen ausgebildet sein. In alternativen Ausgestaltungen kann die elektrische Stangenladevorrichtung 105 auch dazu ausgebildet sein, Bohrstangen seitlich und/oder von oben aus dem Gestängemagazin 103 zu entnehmen. Die elektrische Stangenladevorrichtung 105 kann vorzugsweise auch einen elektrischen Kranarm und/oder Roboterarm zum Entnehmen von Bohrstangen aus dem Gestängemagazin und/oder zum Bereitstellen von Bohrstangen an dem Vorschubschlitten 19 aufweisen.

Auch im zweiten Ausführungsbeispiel umfasst die Verankerungsanordnung 39 der elektrischen Horizontalbohranlage 1 eine Ankerplatte 41. Zusätzlich umfasst die in Fig. 8 gezeigte Verankerungsanordnung 39 aber noch zwei Bodenanker 43. Die Bodenanker 43 sind dazu vorgesehen, zumindest teilweise in den Untergrund, auf dem die elektrische Horizontalbohranlage 1 steht, eingebracht zu werden, um die Horizontalbohranlage 1 gegenüber dem Untergrund zu fixieren. Die Bodenanker 43 sind vorzugsweise zumindest abschnittsweise schraubenförmig ausgebildet und können nach Art einer Schraube in den Untergrund eingedreht werden. Zum Rotieren der Bodenanker 43 ist jeweils ein elektrischer Ankerantrieb 117 vorgesehen. Im gezeigten Ausführungsbeispiel sind die Ankerantriebe 117 jeweils an einem der Ankerplatte 41 gegenüberliegenden Ende des Bodenankers 43 vorgesehen. Die elektrischen Ankerantriebe 117 sind vergleichsweise kompakt und können so unmittelbar an der Verankerungsanordnung 39 angeordnet werden. Hierdurch können zusätzliche Leitungen, wie diese beispielsweise bei einem hydraulischen Antrieb notwendig wären, entfallen. Vorzugsweise ist die Ankerplatte 41 gelenkig mit dem Bohrmast 13 verbunden. So kann die Ankerplatte 41 gegebenenfalls Unebenheiten des Untergrunds ausgleichen.

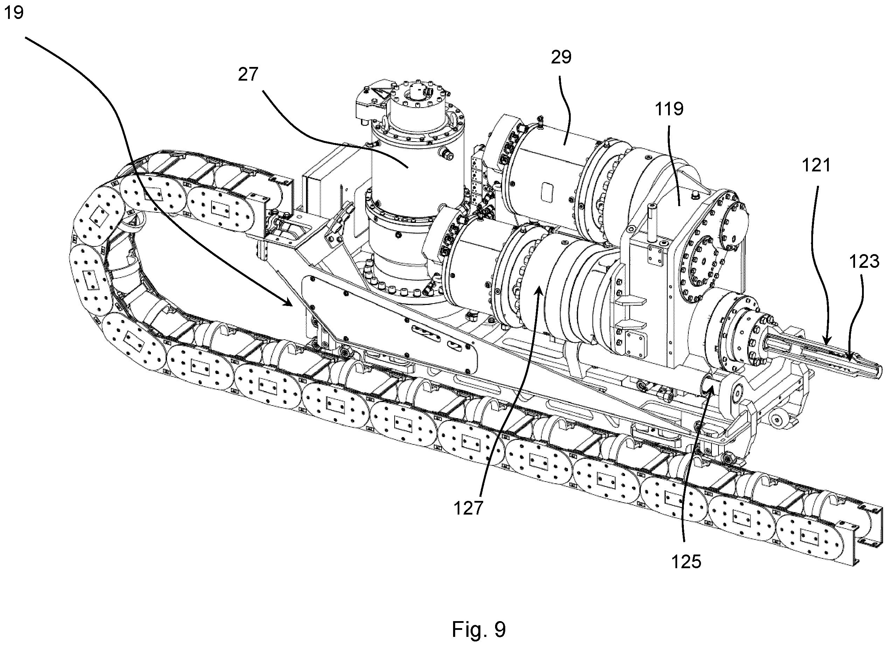

Fig. 9 zeigt den Vorschubschlitten 19 des zweiten Ausführungsbeispiels der Horizontalbohranlage 1. Der Vorschubschlitten 19 trägt hier den Vorschubantrieb 27, den Rotationsantrieb 29 und ein Bohrgetriebe 119. Das Bohrgetriebe 119 umfasst eine erste Antriebswelle, eine erste Abtriebswelle 121, eine zweite Antriebswelle und eine zweite Abtriebswelle 123. Die erste Antriebswelle und die zweite Antriebswelle sind in Fig. 9 durch das Bohrgetriebe 119 und den Rotationsantrieb 29 verdeckt. Die erste Antriebswelle ist im gezeigten Ausführungsbeispiel mit dem elektrischen Rotationsantrieb 29 verbunden. Die erste Antriebswelle steht mit der ersten Abtriebswelle 121 in Wirkverbindung und ist zur Verbindung mit dem Bohrgestänge 21 vorgesehen. Hier untersetzt das Bohrgetriebe 119 eine Eingangsdrehzahl des Rotationsantriebs 29, sodass die erste Abtriebswelle 121 mit einer geringeren Drehzahl aber höherem Drehmoment dreht als die erste Antriebswelle.

Das Bohrgetriebe 119 und der Rotationsantrieb 29 sind vorzugsweise modular auf dem Vorschubschlitten 19 angeordnet. Im gezeigten Ausführungsbeispiel und bevorzugt ist der Rotationsantrieb 29 an das Bohrgetriebe 119 angeflanscht und wird von diesem gehalten.

Das Bohrgetriebe 119 ist vorzugsweise verschiebbar auf dem Vorschubschlitten 19 angeordnet. Hier ist das Bohrgetriebe 119 in Vorschubrichtung RV verschiebbar an dem Vorschubschlitten 19 angeordnet, wobei vorzugsweise eine Fixiereinrichtung zum Fixieren des Bohrgetriebes 119 vorgesehen ist. Zum Verschieben des Bohrgetriebes 119 sind zwei Führungsschienen 125 vorgesehen. Das Bohrgetriebe 119 kann entlang der Führungsschienen verschoben werden, wodurch der Rotationsantrieb 29 leichter zugänglich ist. Vorzugsweise ist die Fixiereinrichtung dazu ausgebildet, das Bohrgetriebe 119 gegen die Führungsschienen 125 zu klemmen.

Die modulare Anordnung des Rotationsantriebs 29 und des Bohrgetriebes 119 erlaubt die Montage weiterer Module auf dem Vorschubschlitten 19. So ist im gezeigten Ausführungsbeispiel ein zusätzlicher Felsbohrantrieb 127 zum Antreiben eines Felsbohrwerkzeugs (nicht gezeigt) vorgesehen. Der Felsbohrantrieb 127 ist hier mit der zweiten Antriebswelle des Bohrgetriebes 119 verbunden und treibt so über die zweite Antriebswelle und das Bohrgetriebe 119 die zweite Abtriebswelle 123 an. Der Felsbohrantrieb 127 und das Felsbohrwerkzeug sind insbesondere dann vorgesehen, wenn die elektrische Horizontalbohranlage 1 zum Herstellen von Bohrungen in felsigen Untergründen eingesetzt wird. Das Felsbohrwerkzeug wird vorzugsweise in dem Bohrgestänge 21 geführt. Vorzugsweise ist daher die erste Abtriebswelle 121 des Bohrgetriebes 119 hohl ausgeführt und die indirekt durch den Felsbohrantrieb 127 angetriebene zweite Abtriebswelle 123 des Bohrgetriebes 119 erstreckt sich durch die erste Abtriebswelle 121. Die modulare Anordnung des Bohrgetriebes 119 und des Rotationsantriebs 29 ermöglicht ein Nachrüsten des Felsbohrantriebs 127 mit geringem Aufwand. Durch die verschiebbare Anordnung des Bohrgetriebes 119 auf dem Vorschubschlitten 19 wird das Nachrüsten des Felsbohrantriebs 127 erleichtert. In anderen Varianten kann aber auch ein Bohrgetriebe 119, das nur eine erste Antriebswelle und eine erste Abtriebswelle 121 umfasst, beim Nachrüsten einer Felsbohrfunktion durch ein Bohrgetriebe 119 mit je zwei Antriebs- und Abtriebswellen ersetzt werden. Durch die Modularität des Bohrgetriebes 119 und des Rotationsantriebs 29 wird auf dem Vorschubschlitten 19 genug Raum zum Nachrüsten einer Felsbohrfunktion bzw. eines Felsbohrantriebs 127 freigehalten.

Es soll verstanden werden, dass zum Rekuperieren elektrischer Energie auch ein Drehmoment von dem Felsbohrwerkzeug und/oder dem Bohrgestänge auf den Felsbohrantrieb 127 bzw. bzw. den Rotationsantrieb 29 übertragen werden kann.

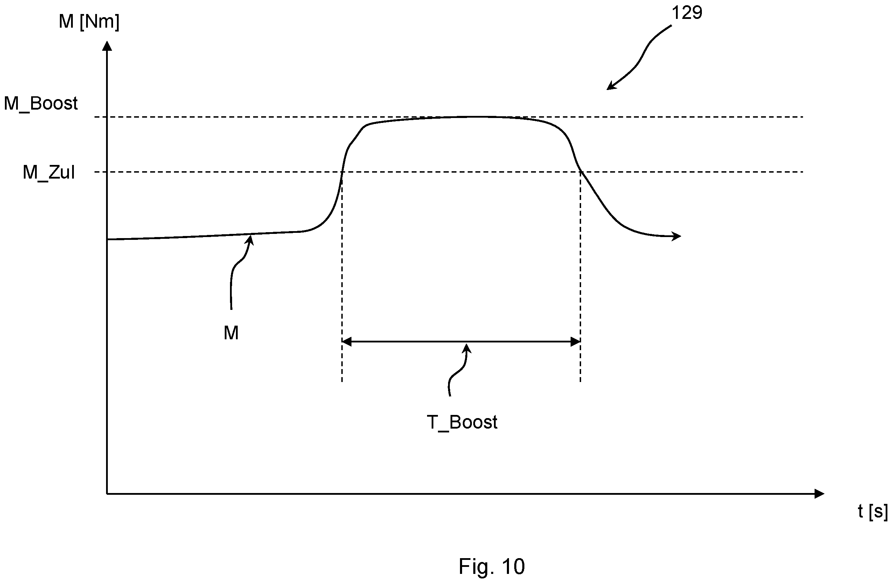

Fig. 10 illustriert eine Boostfunktion 129 der elektrischen Horizontalbohranlage 1. Die Steuereinheit 95 ist im gezeigten Ausführungsbeispiel unter anderem dazu ausgebildet, den Bohrantrieb 25 zu steuern und kann daher auch als Bohrantriebssteuerung 131 bezeichnet werden. Der Bohrantrieb 25 bzw. dessen Einzelantriebe 27, 29 haben hier ein zulässiges Dauer-Moment M_Zul. Der Bohrantrieb 25 kann mit diesem zulässigen Dauer-Moment M_Zul dauerhaft betrieben werden, ohne dass der Bohrantrieb 25 oder die mechanische Struktur der Horizontalbohranlage 1 überlastet wird. In bestimmten Situationen während eines Bohrvorgangs kann es jedoch vorkommen, dass die zulässige Dauer-Moment M_Zul des Bohrantriebs 25 nicht ausreicht, um die Bohrung weiter voranzutreiben. Die Bohrantriebssteuerung 131 ist daher vorzugsweise dazu ausgebildet, auf entsprechende Nutzeranforderung eine Boostfunktion 129 bereitzustellen. Hierfür kann die Bohrantriebssteuerung 131 den Bohrantrieb 25 (bzw. den Rotationsantrieb 29 und/oder den Vorschubantrieb 27) für einen Boostzeitraum T_Boost so ansteuern, dass dieser ein das zulässige Dauer-Moment M_Zul übersteigendes Moment M bereitstellen kann. Die Bohrantriebssteuerung 131 kann insbesondere Momente M bis zu einem Boost-Moment M_Boost freigeben. Falls nötig, kann dann vom Bohrantrieb 25 ein Drehmoment M bereitgestellt werden, das das zulässige Dauer-Moment M_Zul übersteigt. Die Bohrantriebssteuerung 131 ist dazu ausgebildet, einen oberen Grenzwert des Boostzeitraums T_Boost einzuhalten, um Schäden am Bohrantrieb 25 zu vermeiden. Sobald der Boostzeitraum T_Boost abgelaufen ist, kann die Bohrantriebssteuerung 131 ein vom Bohrantrieb 25 bereitstellbares bzw. bereitgestelltes Drehmoment M wieder auf das Dauer-Moment M_Zul begrenzen. Die Boostfunktion 129 ermöglicht es, eine vergleichsweise kleine elektrische Horizontalbohranlage 1 für eine Bohraufgabe zu verwenden, für die üblicherweise deutlich größere und leistungsstärkere Horizontalbohranlagen eingesetzt werden. Die Boostfunktion 129 ist in vielen Anwendungsfällen ausreichend, um die Bewältigung der Bohraufgabe zu gewährleisten, da das maximale Drehmoment einer Horizontalbohranlage häufig nur während eines Bruchteils eines Bohrvorgangs benötigt wird. Der Stahlbau der erfindungsgemäßen Horizontalbohranlage 1 kann so ausgebildet sein, dass die beim Bereitstellen des Boost-Moments M_Boost auf den Stahlbau wirkenden Lasten im Dauerfestigkeitsbereich liegen. Der Stahlbau umfasst insbesondere den Bohrmast 13, den Vorschubschlitten 19 und den Grundrahmen 3.

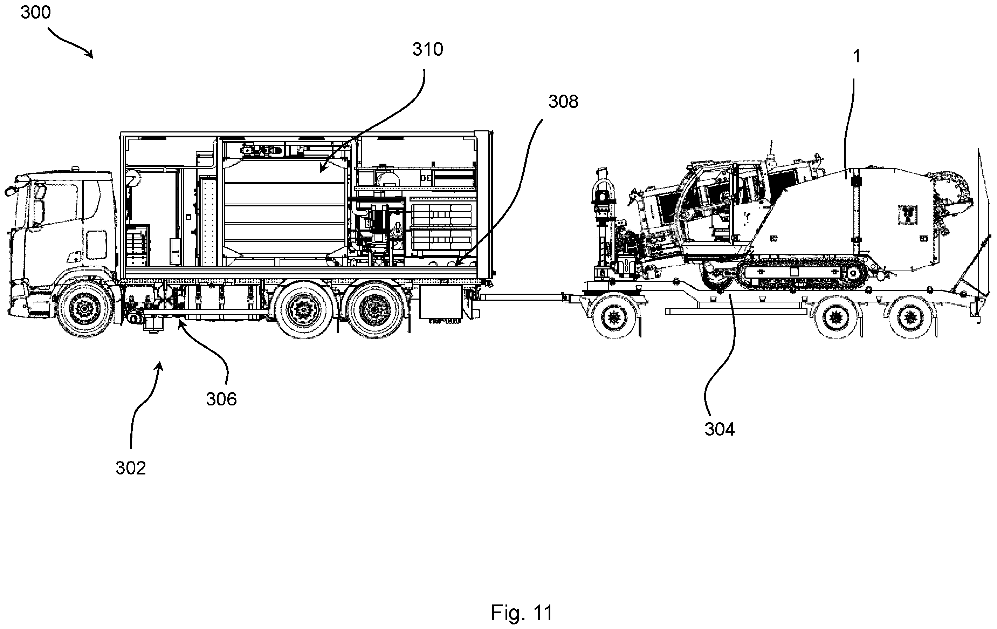

Fig. 11 illustriert ein erstes Ausführungsbeispiel eines erfindungsgemäßen Systems 300. Das System 300 umfasst einen Lastkraftwagen 302 und eine elektrische Bohranlage 1. Hier ist die elektrische Bohranlage 1 analog zur elektrischen Bohranlage 1 gemäß dem zweiten Ausführungsbeispiel ausgebildet. Das System 300 umfasst ferner einen Transportanhänger 304, auf dem die elektrische Horizontalbohranlage 1 angeordnet werden kann, um transportiert zu werden. Vorzugsweise ist der Lastkraftwagen 302 zum Ziehen des Transportanhängers 304 ausgebildet. Die elektrische Horizontalbohranlage 1 des Systems 300 kann so besonders einfach unter Verwendung des Lastkraftwagens 302 zu einem Einsatzort transportiert werden. Am Einsatzort kann die elektrische Horizontalbohranlage 1 vorzugsweise batteriebetrieben vom Transportanhänger 304 abgeladen und zu einem Bohrplatz am Einsatzort fahren.

Im gezeigten Ausführungsbeispiel und bevorzugt umfasst der Lastkraftwagen 302 einen Generator 306. Der Generator 306 ist hier zum Bereitstellen elektrischer Energie für die elektrische Horizontalbohranlage 1 ausgebildet. Der Generator 306 kann beispielsweise mittels einer entsprechenden Kabelverbindung an dem Anschluss 53 der Einspeisung 51 der Leistungselektronik 49 der elektrischen Horizontalbohranlage 1 angeschlossen werden. Der Generator 306 ist vorzugsweise im Fahrgestellt des Lastkraftwagens 302 verbaut und besonders bevorzugt mit einer oder mehreren Wellen und/oder einer oder mehreren Kupplungen und/oder einem oder mehreren Getrieben gekoppelt. Der Generator 306 kann mit einer eigenständigen Antriebseinrichtung, insbesondere einem Verbrennungsmotor, versehen sein. Vorzugsweise ist das System 300 aber so ausgebildet, dass der Generator 306 über einen in den Figuren nicht gezeigten Fahrantriebsmotor des Lastkraftwagens 302 antreibbar ist. Der Fahrantrieb des Lastkraftwagens 302 wird dann nicht nur zum Bewegen des Lastkraftwagens 302 eingesetzt, sondern auch zum Antreiben des Generators 306. Beispielsweise und bevorzugt kann der Generator 306 mit einem Nebenabtrieb eines (Fahr-)Getriebes des Lastkraftwagens 302 gekoppelt sein. Zum Herstellen einer Wirkverbindung zwischen dem Fahrantriebsmotor des Lastkraftwagens 302 und dem Generator 306 können eines oder mehrere Getriebe und/oder eine oder mehrere Kupplungen und/oder eine oder mehrere (flexible) Wellen vorgesehen sein. Die Nutzung des Fahrantriebs des Lastkraftwagens 302 zum Antreiben des Generators 306 reduziert das Gesamtgewicht, sodass auch mit auf dem Transportanhänger 304 angeordneter Horizontalbohranlage 1 ein Systemgewicht erreicht werden kann, das die zulässige Gesamtmasse eines Fahrzeugzugs nicht überschreitet (bspw. 42 t). Auf der Ladefläche 308 des Lastkraftwagens 308 ist hier eine Mischanlage 310 zum Bereitstellen von Spülmedium angeordnet. Beispielsweise kann die Mischanlage 310 zum Bereitstellen eines Bentonit-Wasser-Gemisches vorgesehen sein. Die Mischanlage 310 wird vorzugsweise von dem Generator 306 mit elektrischer Energie versorgt.

### Bezugszeichenliste

- 1: Horizontalbohranlage
- 3: Grundrahmen
- 5: Fahrwerk
- 7: Raupenfahrwerk
- 9: Anlagenplattform
- 11: Bedienkabine
- 13: Bohrmast
- 17: errichtete Stellung
- 19: Vorschubschlitten
- 21: Bohrgestänge
- 23: Gestängeführung
- 24: Brech- und Verschraubvorrichtung
- 25: Bohrantrieb
- 27: Vorschubantrieb
- 29: Rotationsantrieb
- 31: erste Abtriebswelle
- 33: Arbeitsende
- 35: Gegenverzahnung
- 37: Schlittenführung
- 39: Verankerungsanordnung
- 41: Ankerplatte
- 43: Bodenanker
- 45: Spülpumpe
- 47: Mischanlage
- 49: Leistungselektronik
- 50: Fahrantrieb
- 51: Einspeisung
- 53: Anschluss
- 55: Hauptschalter
- 57: Stromrichtereinheit
- 59: Stromrichter
- 61: Filtereinheit
- 63: Zwischenkreisanschluss
- 65: Active-Front-End Umrichter
- 69: Zwischenkreis
- 71: Hochvoltgleichspannungskreis
- 73: Speichereinheit
- 75: Hochvoltbatterie / HV-Batterie
- 77: Speicheranordnung
- 79: Batteriehauptschalter
- 81: Wandler
- 83: Bremswiderstand
- 85: Hydraulikantrieb
- 87: Thermomanagementantrieb
- 89: Thermomanagementsystem
- 91: Spülpumpe
- 93: Mastantrieb
- 95: Steuereinheit
- 97: Steuerleitungen
- 99: Leistungsregeleinheit
- 101: Schleppkette
- 103: Gestängemagazin
- 105: elektrische Stangenladevorrichtung
- 107: Arm
- 109: Thermomanagementkreislauf
- 109.1: erster Thermomanagementkreislauf
- 109.2: zweiter Thermomanagementkreislauf
- 109.3: dritter Thermomanagementkreislauf
- 111: Kühler
- 113: Heizvorrichtung
- 115: Pumpe
- 117: Ankerantrieb
- 119: Bohrgetriebe
- 121: erste Abtriebswelle
- 123: zweite Abtriebswelle
- 125: Führungsstange
- 127: Felsbohrantrieb
- 129: Boostfunktion
- 131: Bohrantriebssteuerung
- 300: System
- 302: Lastkraftwagen
- 304: Transportanhänger
- 306: Generator
- 308: Ladefläche
- 310: Mischanlage
- M: Moment
- M_Boost: Boostmoment
- M_Zul: Dauer-Drehmoment
- P_Auf: gesamte Aufnahmeleistung der elektrischen Horizontalbohranlage
- P_Batt: Batterieleistung / Pufferleistung
- P_Ext: externe Versorgungsleistung
- P_Rekup: Rekuperationsleistung
- P_Rot: Leistung des Rotationsantriebs
- P_Rot_red: reduzierte Leistung des Rotationsantriebs
- P_Ver: Versorgungsleistung
- P_Zul: Zulässige Dauerleistung des Bohrantriebs
- RV: Vorschubrichtung
- T_Boost: Boostzeitraum

## Patentansprüche

1. Elektrische Horizontalbohranlage (1), insbesondere vollelektrische Horizontalbohranlage (1), zum Einsatz beim grabenlosen Verlegen von Leitungen, wobei die Horizontalbohranlage (1) aufweist:
ein Fahrwerk (5) mit einem Fahrantrieb (50),
einen Bohrmast (13), der einen Vorschubschlitten (19) umfasst, der zur Führung eines Bohrgestänges (21) vorgesehen ist,
zumindest einen Bohrantrieb (25), wobei der Bohrantrieb (25) einen Vorschubantrieb (27) zum axialen Verschieben des Vorschubschlittens (19) und einen Rotationsantrieb (29) zum Rotieren des Bohrgestänges (21) umfasst;
und eine Leistungselektronik (49),
wobei der Bohrantrieb (25) und der Fahrantrieb (50) elektrische Antriebe sind, die über die Leistungselektronik (49) versorgt werden können,
wobei die Leistungselektronik (49)
eine Einspeisung (51) zum externen Zuführen elektrischer Energie,
eine Speichereinheit (73), und
einen Zwischenkreis (69) aufweist,
wobei der Fahrantrieb (50), der Bohrantrieb (25) und die Speichereinheit (73) über den Zwischenkreis (69) mit der Einspeisung (51) verbunden sind, und
wobei die Leistungselektronik (49) dazu ausgebildet ist, elektrische Energie zu rekuperieren.

2. Elektrische Horizontalbohranlage (1) nach Anspruch 1, wobei die Leistungselektronik (49) dazu ausgebildet ist, rekuperierte elektrische Energie in der Speichereinheit (73) zwischen zu speichern.

3. Elektrische Horizontalbohranlage (1) nach Anspruch 1 oder 2, wobei die Leistungselektronik (49) dazu ausgebildet ist, den Fahrantrieb (50) zum Bewegen der elektrischen Horizontalbohranlage (1) allein durch die Speichereinheit (73) mit elektrischer Energie zu versorgen, sodass die Horizontalbohranlage (1) ohne externe Energieversorgung verfahrbar ist; und/oder
wobei die Leistungselektronik (49) dazu ausgebildet ist, einen Mastantrieb (93) des Bohrmastes (13) durch die Speichereinheit (73) mit elektrischer Energie zu versorgen, sodass der Bohrmast (13) ohne externe Energieversorgung zwischen einer Transportstellung und einer errichteten Betriebsstellung bewegbar ist, und/oder
wobei die Leistungselektronik (49) dazu ausgebildet ist, unter Verwendung der Speichereinheit (73) ausreichend elektrische Energie bereitzustellen, den Vorschubantrieb (27) und/oder den Rotationsantrieb (29) zumindest unter Teillast zu betreiben.

4. Elektrische Horizontalbohranlage (1) nach einem der Ansprüche 1 bis 3, wobei die Einspeisung (51) so ausgebildet ist, dass der elektrischen Horizontalbohranlage (1) externe elektrische Energie sowohl mit Gleichspannung als auch mit Wechselspannung zugeführt werden kann.

5. Elektrische Horizontalbohranlage (1) nach einem der vorstehenden Ansprüche, wobei der Zwischenkreis (69) einen Gleichspannungskreis, insbesondere Hochvoltgleichspannungskreis (71), umfasst und wobei die Einspeisung (51) zumindest einen Anschluss (53), eine Filtereinheit (61); und einen Stromrichter (59), insbesondere ein Active-Front-End-Umrichter (65), umfasst.

6. Elektrische Horizontalbohranlage (1) nach einem der vorstehenden Ansprüche, ferner aufweisend ein flüssigkeitsbasiertes Thermomanagementsystem (89) zum Temperieren zumindest eine Teilkomponente der Leistungselektronik (49), des Bohrantriebs (25), des Fahrantriebs (50) und/oder einer Bedienkabine (11) der Horizontalbohranlage (1).

7. Elektrische Horizontalbohranlage (1) nach einem der vorstehenden Ansprüche, wobei die Leistungselektronik (49) dazu ausgebildet ist, zumindest einem Antrieb (25, 27, 29) unter Verwendung der Speichereinheit (73) eine elektrische Leistung bereitzustellen, die größer ist als eine externe Versorgungsleistung einer mit der Einspeisung (51) verbundenen externen Energieversorgung.

8. Elektrische Horizontalbohranlage (1) nach einem der vorstehenden Ansprüche, ferner aufweisend eine Leistungsregeleinheit (99), die dazu ausgebildet ist,
eine Leistungsaufnahme eines Antriebs (27, 29, 50) zu begrenzen, falls ein Gesamtleistungsbedarf (P_Auf) der Horizontalbohranlage (1) größer ist als ein an der Einspeisung (51) bereitgestellte Versorgungsleistung (P_Ext), und/oder
mittels der Speichereinheit (73) eine Pufferleistung (P_Batt) bereitzustellen, falls ein Gesamtleistungsbedarf (P_Auf) der Horizontalbohranlage (1) größer ist als ein an der Einspeisung (51) bereitgestellte Versorgungsleistung (P_Ext).

9. Elektrische Horizontalbohranlage (1) nach einem der vorstehenden Ansprüche, aufweisend ein Gestängemagazin (103) zur Aufnahme von Bohrstangen, wobei das Gestängemagazin (103) vorzugsweise ferner eine elektrische Ladevorrichtung (105) zum Bereitstellen von Bohrstangen an dem Vorschubschlitten (19) aufweist.

10. Elektrische Horizontalbohranlage (1) nach einem der vorstehenden Ansprüche, ferner aufweisend
eine Verankerungsanordnung (39), die an einem Arbeitsende (33) des Bohrmastes (13) vorgesehen ist, wobei die Verankerungsanordnung (39) zumindest einen Bodenanker (43) zum Verankern der Horizontalbohranlage (1) an einem Einsatzort aufweist, wobei der Bodenanker (43) vorzugsweise elektrisch antreibbar ist; und/oder
eine elektrische Spülpumpe (45), die über die Leistungselektronik (49) versorgt werden kann, wobei die Spülpumpe (45) vorzugsweise zumindest teilweise, bevorzugt vollständig, von der Speichereinheit (73) mit elektrischer Energie versorgt werden kann.

11. Elektrische Horizontalbohranlage (1) nach einem der vorstehenden Ansprüche, wobei der Rotationstrieb (29) über ein Bohrgetriebe (119) mit dem Bohrgestänge (21) verbunden ist.

12. Elektrische Horizontalbohranlage (1) nach Anspruch 11, wobei zumindest der Rotationsantrieb (29) und das Bohrgetriebe (119) auf dem Vorschubschlitten (19) angeordnet sind, vorzugsweise modular auf dem Vorschubschlitten (19) angeordnet sind.

13. Elektrische Horizontalbohranlage (1) nach Anspruch 11, wobei die Horizontalbohranlage (1) einen elektrischen Felsbohrantrieb (127) zum Antreiben eines Felsbohrwerkzeugs aufweist, der vorzugsweise auf dem Vorschubschlitten (19) angeordnet ist,
wobei das Bohrgetriebe (119) eine erste Antriebswelle, eine zweite Antriebswelle, eine erste Abtriebswelle (121) und eine zweite Abtriebswelle (123) aufweist, wobei der Rotationsantrieb (29) des Bohrantriebs (25) mit der ersten Antriebswelle verbunden ist, wobei das Bohrgestänge (21) mit der ersten Abtriebswelle (121) verbunden ist, wobei der Felsbohrantrieb (127) mit der zweiten Antriebswelle verbunden ist, wobei das Felsbohrwerkzeug zumindest mittelbar mit der zweiten Abtriebswelle (123) verbindbar ist, und wobei die zweite Abtriebswelle (123) vorzugsweise in der ersten Abtriebswelle (121) angeordnet ist.

14. Elektrische Horizontalbohranlage (1) nach einem der vorstehenden Ansprüche, wobei der Bohrantrieb (25), insbesondere der Vorschubantrieb (27) des Bohrantriebs (25), zum Bereitstellen eines Dauer-Drehmoments (M_Zul) und zum Bereitstellen eines das Dauer-Drehmoment (M_Zul) übersteigenden Drehmoments ausgebildet ist, wobei die Horizontalbohranlage (1) eine Bohrantriebssteuerung aufweist, die dazu ausgebildet ist, ein vom Bohrantrieb (25) bereitstellbares Drehmoment auf das Dauer-Drehmoment (M_Zul) zu begrenzen, eine Nutzeranforderung zu erfassen und in Antwort auf das Erfassen der Nutzeranforderung das vom Bohrantrieb (25) bereitstellbare Drehmoment bis zu einem das Dauer-Drehmoment (M_Zul) übersteigenden Boost-Drehmoment (M_Boost) freizugeben, insbesondere für einen Boostzeitraum (T_Boost) freizugeben; und/oder
wobei der Bohrantrieb (25), insbesondere der Vorschubantrieb (27) des Bohrantriebs (25), zum Bereitstellen einer Dauerleistung (P_Zul) und zum Bereitstellen einer die Dauerleistung (P_Zul) übersteigenden Leistung ausgebildet ist, wobei die Horizontalbohranlage (1) eine Bohrantriebssteuerung aufweist, die dazu ausgebildet ist, eine vom Bohrantrieb (25) bereitstellbare Leistung auf die Dauerleistung (P_Zul) zu begrenzen, eine Nutzeranforderung zu erfassen und in Antwort auf das Erfassen der Nutzeranforderung die vom Bohrantrieb (25) bereitstellbare Leistung bis zu einer die Dauerleistung (P_Zul) übersteigenden Boost-Leistung freizugeben, insbesondere für einen Boostzeitraum (T_Boost) freizugeben.

15. System (300) umfassend einen Lastkraftwagen (302) und eine Bohranlage (1) nach einem der vorstehenden Ansprüche,
wobei der Lastkraftwagen (302) einen Fahrantriebsmotor und einen Generator (306) umfasst,
wobei der Generator (306) zumindest mittelbar durch den Fahrantriebsmotor antreibbar ist, und
wobei der Generator (306) dazu ausgebildet ist, die Horizontalbohranlage (1) mit elektrischer Energie zu versorgen.
